# EUROPÄISCHE PATENTSCHRIFT

(11) **EP 3 788 418 B1**
(45) Veröffentlichungstag und Bekanntmachung des Hinweises auf die Patenterteilung: **05.08.2026**
(21) Anmeldenummer: 19714304.3
(22) Anmeldetag: 14.03.2019
(51) Int. Cl.: G02B 5/02, G02B 27/09, G02B 19/00, F21V 5/00

(54) **VERFAHREN ZUR HERSTELLUNG EINER BELEUCHTUNGSVORRICHTUNG UND DAMIT HERGESTELLTE BELEUCHTUNGSVORRICHTUNG**
METHOD FOR PRODUCING A LIGHTING DEVICE AND LIGHTING DEVICE PRODUCED THEREBY
PROCÉDÉ DE FABRICATION D'UN DISPOSITIF D'ÉCLAIRAGE ET DISPOSITIF D'ÉCLAIRAGE AINSI FABRIQUÉ

(30) Priorität: 15.03.2018 AT 502202018
(43) Veröffentlichungstag der Anmeldung: 10.03.2021
(73) Patentinhaber: Färber, Werner, 8413 St. Georgen (AT); Trois, Wolfgang, 8625 Turnau (AT); Resch, Gerald, 8421 St. Stefan i.R. (AT)
(72) Erfinder: Färber, Werner, 8413 St. Georgen (AT); Trois, Wolfgang, 8625 Turnau (AT); Resch, Gerald, 8421 St. Stefan i.R. (AT)
(74) Vertreter: Wirnsberger & Lerchbaum Patentanwälte OG
(86) Internationale Anmeldenummer: PCT/AT2019/060086
(87) Internationale Veröffentlichungsnummer: WO 2019/173856

(56) Entgegenhaltungen:
- EP-A1- 2 309 316
- EP-A1- 2 309 316
- EP-A1- 2 309 316
- EP-A1- 2 495 588
- EP-A1- 2 495 588
- EP-A1- 2 495 588
- EP-A1- 2 881 764
- EP-A1- 2 881 764
- EP-A1- 2 881 764
- WO-A1-2012/147653
- WO-A1-2012/147653
- WO-A1-2015/095189
- WO-A1-2015/095189
- WO-A1-2015/095189
- DE-A1- 10 330 017
- DE-A1- 10 330 017
- US-A1- 2001 030 638
- US-A1- 2001 030 638
- US-A1- 2001 030 638
- US-A1- 2009 168 421
- US-A1- 2009 168 421
- US-A1- 2009 168 421
- US-A1- 2017 343 186
- US-A1- 2017 343 186

## Beschreibung

Die Erfindung betrifft ein Verfahren zur Herstellung einer Beleuchtungsvorrichtung, wobei die Beleuchtungsvorrichtung eine Lichtlenkfolie zur Änderung einer Lichtstärkeverteilung eines Leuchtmittels aufweist, wobei zur Herstellung der Lichtlenkfolie in eine Folie an zumindest einer Oberfläche der Folie eine Struktur mit Erhöhungen und Vertiefungen eingeprägt wird, um eine Richtung eines auf die Struktur auftreffenden Lichtes des Leuchtmittels zu ändern, wobei Abmessungen der Erhöhungen und Vertiefungen größer als eine Wellenlänge des auf diese auftreffenden Lichtes des Leuchtmittels sind, wobei zumindest eine der Erhöhungen, vorzugsweise eine Vielzahl der Erhöhungen, in einem ersten zu einer Oberfläche der Folie vertikalen Querschnitt mit einer Außenkontur mit variierenden Krümmungen ausgebildet wird, wobei die Herstellung der Lichtlenkfolie folgende Schritte umfasst:
a) Vorgeben einer gewünschten, gegebenenfalls inhomogenen, Lichtstärkeverteilung;
b) Berechnen der Struktur abhängig von einem Abstand zwischen Leuchtmittel und Lichtlenkfolie sowie einer Abstrahlcharakteristik des Leuchtmittels, um die vorgegebene Lichtstärkeverteilung zu erreichen;
c) Einprägen der berechneten Struktur in die zumindest eine Oberfläche der Folie, um die Lichtlenkfolie auszubilden,
wobei die Struktur der Lichtlenkfolie in eine erste Oberfläche der Lichtlenkfolie eingebracht ist.

Des Weiteren betrifft die Erfindung eine Beleuchtungsvorrichtung mit einer Lichtlenkfolie zur Änderung einer Lichtstärkeverteilung eines von einem Leuchtmittel emittierten Lichtes, aufweisend eine Folie, wobei in zumindest eine Oberfläche der Folie eine Struktur mit Erhöhungen und Vertiefungen eingebracht, insbesondere eingeprägt, ist, um eine Richtung eines auf die Struktur auftreffenden Lichtes des Leuchtmittels zu ändern, wobei Abmessungen der Erhöhungen und Vertiefungen größer als eine Wellenlänge des auf diese auftreffenden Lichtes des Leuchtmittels sind, wobei zumindest eine der Erhöhungen, vorzugsweise eine Vielzahl von Erhöhungen, in einem ersten zu einer Oberfläche der Folie vertikalen Querschnitt mit einer Außenkontur mit variierenden Krümmungen ausgebildet ist, wobei die Struktur der Lichtlenkfolie in eine erste Oberfläche der Lichtlenkfolie eingebracht ist.

Zur Verbesserung der Leuchteigenschaften von Leuchten werden üblicherweise transparente Optiken vor einer Lichtquelle der Leuchte angeordnet, um eine Lichtstärkeverteilung der Leuchte bzw. des von der Lichtquelle emittierten Lichtes zu optimieren. Derartige Optiken werden in der Regel hergestellt, indem in eine transparente Kunststoff- oder Glasplatte Strukturen geschliffen werden, sodass auf die Strukturen auftreffendes Licht durch Lichtbrechung abgelenkt wird. Es sind auch Spritzgussverfahren bekannt, mit welchen solche Optiken hergestellt werden können. Auf Kunststoff- oder Glasplatten basierende Optiken sind jedoch mit einem großen Herstellungsaufwand verbunden und unterliegen zudem Einschränkungen in Bezug auf deren Formgestaltung.

Als vorteilhafte Weiterentwicklung wurden Optiken auf Folienbasis entwickelt, sogenannte Lichtlenkfolien mit einer durchschnittlichen Dicke von kleiner als 1 mm. Dabei wird in eine Oberfläche einer Folie eine Struktur mit Erhöhungen und Vertiefungen eingefügt, um eine Richtung eines auf die Struktur auftreffenden Lichtes zu ändern. Die Struktur ist dabei in der Regel als Mikrostruktur mit einer durchschnittlichen Strukturdicke von etwa 400 µm ausgeführt. Zur Herstellung einer solchen Feinstruktur haben sich insbesondere UV-Lithographie-Verfahren oder Prägeverfahren bewährt. Derartig hergestellte Lichtlenkfolien können beispielsweise auf einem transparenten Abdeckelement einer Leuchte vor einer Lichtquelle der Leuchte angeordnet werden, um eine Lichtstärkeverteilung der Leuchte zu beeinflussen. Abhängig von einer Form und/oder Anordnung der in die Oberfläche der Lichtlenkfolie eingebrachten Erhöhungen und Vertiefungen, welche auch als Mikroprismen bezeichnet werden, kann eine Lichtstärkeverteilung unterschiedlich beeinflusst bzw. geändert werden. Es wurden unterschiedliche Formen und Anordnungsvarianten von Erhöhungen bzw. Vertiefungen entwickelt, welche eine bestimmte Änderung einer Lichtstärkeverteilung eines von einer Lichtquelle emittierten Lichtes bewirken sollen.

Bekannt sind etwa Lichtlenkfolien, welche als Diffusor ausgebildet sind und eine Lichtstreuung zum Ziel haben. Eine derartige Diffusorfolie ist beispielsweise im Dokument WO 2012/141899 A1 offenbart. Die Lichtlenkfolie ist dabei mit einer Mikrostruktur aus Konen oder Pyramiden mit zufällig variierenden Öffnungswinkeln ausgebildet, wodurch eine Homogenisierung von auf die Lichtlenkfolie auftreffendem Licht erreicht werden soll.

Ähnliche Varianten von Diffusorstrukturen sind beispielsweise auch in den Dokumenten EP 2 309 316 A1 oder WO 2015/095189 A1 offenbart. Derartige Diffusorfolien bezwecken in der Regel eine Homogenisierung oder Entblendung eines Lichtes einer Lichtquelle.

Als Weiterentwicklung wurden darüber hinaus Lichtlenkelemente auf Folienbasis, sogenannte Lichtlenkfolien, entwickelt, welche eine Formung einer bestimmten Lichtstärkeverteilung bzw. Lichtverteilungskurve zum Ziel haben und damit einen praktikablen Ersatz von mit Kunststoff- oder Glasplatten hergestellten Optiken darstellen sollen.

So offenbart das Dokument WO 2017/050929 A1 eine Lichtlenkfolie, wobei eine Oberfläche der Folie Erhöhungen aufweist, welche insbesondere konusförmig oder pyramidenförmig sind. Die Erhöhungen weisen dabei Flankenabschnitte mit einem einheitlichen Winkel zu einer parallel zur Oberfläche ausgerichteten Referenzebene auf. Durch den einheitlichen Winkel der Flankenabschnitte soll eine starke Entblendung und eine Formung insbesondere einer flügelartigen Lichtverteilungskurve erreichbar sein.

Das Dokument WO 2017/050923 A1 offenbart eine ähnliche Lichtlenkfolie, wobei durch einen bestimmten Winkelbereich von Flankenabschnitten zusätzlich zur Formung einer Lichtverteilungskurve eine hohe Light-Output-Rate erreichbar sein soll.

Das Dokument EP 2 881 764 A1 offenbart eine Lichtlenkfolie für Elektrolumineszenzelemente, wobei die Lichtlenkfolie eine konvex-konkave Struktur aufweist, in welche Streupartikel eingebracht sind. Das Dokument US 2009/0168421 A1 offenbart eine Diffusionsplatte, wobei die Diffusionsplatte elliptisch geformte Erhöhungen aufweist. Das Dokument US 2001/0030638 A1 offenbart eine optische Folie für eine Hintergrundbeleuchtung, wobei die Folie an deren Oberfläche konvex geformte Prismen, in welche feine Partikel eingebracht sind, aufweist. Das Dokument EP 2 495 588 A1 offenbart eine Prismenplatte, welche eine Mehrzahl von dreieckig geformten Prismenstreifen aufweist. Das Dokument WO 2012/147653 A1 offenbart eine Diffusionsfolie mit linsenförmigen Oberflächenstrukturen.

Des Weiteren offenbart das Dokument US 2017/0343186 A1 eine Lichtmaschine mit einem LED-Array und eine Lichtleiterplatte zur Lichtleitung. Das Dokument DE 103 30 017 A1 offenbart ein Verfahren zur Herstellung von Lichtbrechungsstrukturen auf einer E/TFE Folie mit passiven oder aktiven Pigmenten.

Diese Lichtlenkfolien stellen häufig einen praktikablen Ersatz für auf Basis von Kunststoffplatten gefertigten Optiken bei einem Einsatz in gebräuchlichen Leuchten dar, um eine Lichtstärkeverteilung zu optimieren. So können mit den vorgenannten Ausgestaltungen von Erhöhungen in Form von Konen oder Pyramiden, welche nach erprobten Schemata angeordnet werden, passable Lichtlenkungen erreicht werden, um übliche Lichtverteilungskurven auszubilden.

Im Zuge des Einführens von lichtemittierenden Dioden (LEDs) zum Zweck einer Alltagsbeleuchtung und einem vermehrten Verdrängen von konventionellen Leuchtmitteln wie Glühlampen bzw. Leuchtstofflampen durch LEDs sind neue Beleuchtungskonzepte entstanden, welche dem veränderten Abstrahlverhalten von LEDs Rechnung tragen. LEDs sind üblicherweise als Punktstrahler ausgebildet und weisen zudem eine gerichtete Abstrahlcharakteristik auf. Dieses Abstrahlverhalten berücksichtigend weisen moderne auf LEDs basierende Lichtquellen häufig eine Vielzahl von einzelnen LEDs auf, welche zudem über einen räumlich ausgedehnten Bereich verteilt angeordnet sind. Dies führt zu komplexen Abstrahlcharakteristiken, wodurch eine Lichtlenkung mit üblichen Lichtlenkfolien erschwert wird und gewünschte Lichtstärkeverteilungen häufig nur mit geminderter Präzision erreicht werden können.

Hier setzt die Erfindung an. Aufgabe der Erfindung ist es, ein Verfahren der eingangs genannten Art anzugeben, mit welchem eine Beleuchtungsvorrichtung hergestellt werden kann, welche eine optimierte Änderung einer Lichtstärkeverteilung eines von der Beleuchtungsvorrichtung emittierten Lichtes ermöglicht.

Weiter ist es ein Ziel, eine Beleuchtungsvorrichtung der eingangs genannten Art anzugeben, welche eine optimierte Änderung einer Lichtstärkeverteilung eines von der Beleuchtungsvorrichtung emittierten Lichtes ermöglicht.

Die Aufgabe wird erfindungsgemäß dadurch gelöst, dass bei einem Verfahren der eingangs genannten Art die Struktur ausgebildet ist, vom Leuchtmittel emittiertes Licht derart in Richtung einer zweiten Oberfläche der Lichtlenkfolie zu leiten, dass das Licht mit einer Totalreflexion an der zweiten Oberfläche reflektierbar ist und anschließend von der Beleuchtungsvorrichtung für eine Beleuchtung abstrahlbar ist.

Grundlage der Erfindung ist die Idee, Lichtlenkfolien entsprechend spezifischer Anwendungsanforderungen auszubilden und damit eine an einen Einsatzzweck angepasste Lichtstärkeverteilung zu erreichen. Dabei ist vorgesehen, dass die Lichtstärkeverteilung eines von einer Lichtquelle emittierten Lichtes durch Reflexion an der Lichtlenkfolie oder durch Transmission durch die Lichtlenkfolie hindurch geändert bzw. gezielt angepasst wird. Ein erfindungsgemäßes Verfahren ermöglicht es daher, Lichtlenkfolien herzustellen, welche als Optik wirken, indem Licht durch diese transmittiert und dabei an der Struktur gebrochen wird, und/oder als Reflektor wirken, indem Licht an der Struktur reflektiert wird. Die Beleuchtungsvorrichtung weist zumindest ein, bevorzugt mehrere, Lichtquellen bzw. Leuchtmittel auf, welche bevorzugt als LEDs ausgebildet sind. Die Lichtlenkfolie ist dann ausgebildet, eine Abstrahlcharakteristik eines Leuchtmittels der Beleuchtungsvorrichtung zu ändern. Eine einfache Herstellbarkeit wird erreicht, wenn das zumindest eine Leuchtmittel als LED-Streifen ausgebildet ist.

Die Bezeichnung Licht ist in diesem Zusammenhang als Synonym für eine elektromagnetische Strahlung mit einer Wellenlänge zu verstehen, welche in einem für das menschliche Auge sichtbaren Bereich, in einem Ultraviolett-Bereich, auch UV-Bereich genannt, oder in einem Infrarot-Bereich, auch IR-Bereich genannt, des elektromagnetischen Wellenspektrums liegt.

Indem eine gewünschte Lichtstärkeverteilung vorgegeben wird und eine in zumindest eine Oberfläche der Folie einzuprägende Struktur entsprechend der vorgegebenen Lichtstärkeverteilung berechnet wird, um diese zu erreichen, ist die Lichtlenkfolie spezifisch auf einen jeweiligen Einsatzzweck abgestimmt herstellbar. Je nach Positionierung der Lichtlenkfolie relativ zur Lichtquelle treffen abhängig von einem Abstand zwischen Lichtlenkfolie und Lichtquelle sowie abhängig von einer Abstrahlcharakteristik der Lichtquelle Lichtstrahlen in unterschiedlichen Winkeln und/oder mit unterschiedlichen Intensitäten auf die Lichtlenkfolie. Indem vorgesehen ist, dass in eine Berechnung der Struktur der Abstand zwischen Lichtquelle und Lichtlenkfolie sowie die Abstrahlcharakteristik der Lichtquelle eingeht, wird das Abstrahlverhalten der Lichtquelle und eine spätere Arbeitsposition der Lichtlenkfolie relativ zur Lichtquelle bei einer Erstellung der Struktur berücksichtigt, wodurch die vorgegebene Lichtstärkeverteilung in hohem Maße nachgebildet bzw. erreicht werden kann. Zweckmäßig erfolgt das Berechnen mit analytischen und/oder numerischen Berechnungsalgorithmen, insbesondere in Kombination mit computerunterstützter Modellbildung und/oder Simulation.

Die berechnete Struktur wird in die zumindest eine Oberfläche der Folie eingeprägt, um die Lichtlenkfolie auszubilden. Prägeverfahren ermöglichen es, Strukturen, insbesondere Strukturen im Mikrometer-Bereich, mit hoher Genauigkeit in eine Oberfläche einer Folie einzuprägen. Die berechnete Struktur wird formpräzise in die Oberfläche der Folie eingeprägt, wodurch eine Lichtstärkefolie ausgebildet wird, welche eine präzise Formung des von der Lichtquelle emittierten Lichtes entsprechend der vorgegebenen Lichtstärkeverteilung ermöglicht, wodurch eine optimierte Änderung einer Lichtstärkeverteilung eines von einer Lichtquelle emittierten Lichtes erreicht werden kann.

Grundsätzlich wird die berechnete Struktur in eine der Oberflächen der Folie eingeprägt. Um komplexe Lichtstärkeverteilungen zu formen, kann es auch erforderlich sein, dass die berechnete Struktur in beide Oberflächen der Folie eingeprägt wird. Dies erhöht zwar einen Herstellungsaufwand und/oder einen Berechnungsaufwand, allerdings sind dadurch besonders starke Änderungen einer Lichtstärkeverteilung eines von einer Lichtquelle emittierten Lichtes möglich. Lichtstärkeverteilungen können damit besonders präzise geformt und/oder komplex ausgebildet werden. Es versteht sich, dass sich die in die beiden Oberflächen der Folie eingeprägten Ausformungen der Struktur üblicherweise voneinander unterscheiden.

Es hat sich gezeigt, dass es vorteilhaft ist, wenn eine Oberfläche der Lichtlenkfolie mit einer bestimmten Rauheit ausgebildet wird. Mit Vorteil ist hierzu vorgesehen, dass eine Oberfläche der Lichtlenkfolie mit einer mittleren Rauheit Rₐ, auch Mittelrauwert genannt, zwischen 0,4 µm und 0,9 µm und/oder einer gemittelten Rautiefe R_{z}, auch Zehnpunkthöhe genannt, zwischen 3 µm und 7 µm ausgebildet wird. Dadurch wird eine Homogenisierung des auf die Lichtlenkfolie und/oder die Struktur auftreffenden Lichtes erreicht. Unerwünschte raumwinkelabhängige Intensitätsschwankungen in der durch die Lichtlenkfolie geformten Lichtstärkeverteilung werden auf diese Weise minimiert. Derartige Intensitätsschwankungen können beispielsweise durch Lichtreflexionen innerhalb eines Aufbaus der Lichtquelle verursacht sein, etwa wenn die Lichtquelle mit mehreren räumlich beabstandeten Leuchtmitteln gebildet ist. Bewährt hat es sich, wenn sowohl die mittlere Rauheit als auch die mittlere Rautiefe Werte entsprechend den vorgenannten Werte-Bereichen aufweisen, wodurch eine besonders gleichmäßige Homogenisierung erreicht wird. Als besonders praktikabel haben sich dabei eine mittlere Rauheit zwischen 0,5 µm und 0,7 µm und/oder eine gemittelte Rautiefe zwischen 4 µm und 5 µm herausgestellt. Rauheitswerte in diesem Bereich ermöglichen eine ausreichende Homogenisierung, ohne dass dabei gleichzeitig durch die Rauheit verursachte Streueffekte berücksichtigt werden müssen.

Grundsätzlich wird die Homogenisierung erreicht, wenn eine der Oberflächen der Lichtlenkfolie mit einer Rauheit entsprechend den vorgenannten Werte-Bereichen für die mittlere Rauheit und/oder gemittelte Rautiefe ausgebildet wird. Dies kann jene Oberfläche der Folie sein, in welche die Struktur eingeprägt ist oder jene welche dieser gegenüberliegt. Um eine stärkere Homogenisierung zu erreichen, können aber auch beide Oberflächen der Lichtlenkfolie mit einer solchen Rauheit ausgebildet sein.

Bevorzugt ist es, wenn Außenflächen der Erhöhungen und/oder Außenflächen der Vertiefungen mit einer mittleren Rauheit und/oder gemittelten Rautiefe entsprechend den vorgenannten Werte-Bereichen ausgebildet werden. Damit wird sowohl die Lichtlenkung als auch die Homogenisierung des auf die Lichtlenkfolie auftreffenden Lichtes durch die eingeprägte Struktur bewirkt, wodurch unerwünschte potenzielle Streueffekte vermieden werden.

Gleichzeitig hat sich herausgestellt, dass die Lichtstärkeverteilung besonders scharf abgegrenzt geformt werden kann, wenn eine Oberfläche der Lichtlenkfolie besonders glatt ausgebildet wird. Vorteilhaft ist es hierzu, wenn eine Oberfläche der Lichtlenkfolie mit einer mittleren Rauheit kleiner als 0,25 µm und/oder einer gemittelten Rautiefe kleiner als 2 µm ausgebildet wird. Auch hier kann dies jene Oberfläche der Folie sein, in welche die Struktur eingeprägt ist, oder jene, welche dieser gegenüberliegt.

Um sowohl die vorgenannte Homogenisierung zu nutzen als auch eine Ausbildung einer scharf abgegrenzten Lichtstärkeverteilung zu begünstigen, hat es sich als Kompromiss bewährt, eine der Oberflächen der Lichtlenkfolie mit einer Rauheit entsprechend den vorgenannten Werte-Bereichen für eine glatte Oberfläche und die andere Oberfläche der Lichtlenkfolie mit einer Rauheit entsprechend den vorgenannten Werte-Bereichen für eine raue Oberfläche bzw. eine Oberfläche mit einer bestimmten Rauheit auszubilden.

Es hast sich bewährt, dass die Lichtlenkfolie mit einer durchschnittlichen Dicke kleiner als 900 µm, üblicherweise kleiner 850 µm, beispielsweise etwa 800 µm, ausgebildet wird. Zweckmäßig ist es, wenn die Lichtlenkfolie mit einer durchschnittlichen Dicke kleiner als 600 µm, vorzugsweise kleiner als 400 µm, ausgebildet wird. Dies ermöglicht einerseits eine materialreduzierte und/oder kostenreduzierte Herstellung, andererseits aber auch ein vorteilhaftes Transmissionsverhalten, da eine Lichtstreuung verursacht durch ein Material der Folie in der Regel minimiert werden kann. Insbesondere kann es zweckmäßig sein, wenn die Lichtlenkfolie mit einer Dicke kleiner als 400 µm, ausgebildet wird. Dadurch wird eine Flexibilität bzw. Elastizität der Folie erreicht, welche es ermöglicht, die Folie an eine Form einer gekrümmten Fläche, beispielsweise eine gekrümmt geformte Abdeckung einer Leuchte, passgenau anzulegen.

Bevorzugt ist vorgesehen, dass die Struktur mit einer durchschnittlichen Höhe zwischen 10 µm und 200 µm ausgebildet wird. Eine Höhe der Struktur meint dabei einen vertikalen Abstand zwischen den höchsten Punkten der Erhöhungen und den tiefsten Punkten der Vertiefungen. Eine Struktur mit einer solchen Höhe ermöglicht einerseits eine effiziente Lichtlenkung, ist andererseits aber noch klein genug, dass die optische Wahrnehmbarkeit der Struktur durch einen Anwender nicht zu einem störenden Einfluss wird. Besonders bevorzugt ist es, wenn die Struktur mit einer Höhe kleiner als 90 µm ausgebildet ist. Dadurch wird die Struktur von einem Anwender praktisch kaum mehr wahrgenommen und muss insbesondere hinsichtlich eines Erscheinungsbildes, welches bei einem Element für eine Beleuchtungsanwendung einen einsatzrelevanten Faktor darstellt, nicht mehr berücksichtigt werden.

Es ist von Vorteil, dass im Schritt c) die Struktur mit zumindest einer rotierenden Prägewalze in die Oberfläche der Folie eingeprägt wird. Dadurch wird die Struktur sehr präzise und formgenau in die Folie eingeprägt. Eine Prägewalze bezeichnet dabei eine insbesondere zylindrisch geformte Walze mit einer Mantelfläche, in welche ein zu einer einzuprägenden Struktur korrespondierendes Profil eingearbeitet ist. In einer üblichen Ausführungsvariante wird die Prägewalze mit einer Trägerwalze gebildet, auf welcher eine Prägehülse lösbar angeordnet ist, wobei eine Außenfläche der Prägehülse die Mantelfläche der Prägewalze bildet. Zum Einarbeiten eines Profils in die Prägehülse bzw. um eine Prägehülse durch eine andere Prägehülse zu ersetzen, kann die Prägehülse von der Trägerwalze entfernt werden, auch bezeichnet als Sleeve-System. Zweckmäßig ist dabei vorgesehen, dass die Prägehülse durch seitliches Aufschieben auf die Trägerwalze auf dieser angeordnet wird.

Üblicherweise ist dabei vorgesehen, dass die berechnete Struktur als Negativbild in die Mantelfläche der Prägewalze bzw. Prägehülse eingearbeitet wird. In die Folie einzuprägende Erhöhungen bzw. Vertiefungen entsprechen also Vertiefungen bzw. Erhöhungen in der Mantelfläche der Prägewalze bzw. Prägehülse. Die Prägewalze ist um eine Rotationsachse rotierbar gelagert. Indem die Prägewalze bzw. deren Mantelfläche abrollend über eine Folienoberfläche geführt wird, wird eine zum Profil korrespondierende Struktur in die Folienoberfläche geprägt.

Wenn die Mantelfläche der Prägewalze bzw. Prägehülse aus einer Al-Zn-Basislegierung gefertigt ist, kann das Profil bzw. das Negativbild besonders präzise in die Mantelfläche eingearbeitet werden. Al-Zn-Legierungen weisen eine hohe Festigkeit auf und können formgenau bearbeitet werden. Bevorzugt ist dabei vorgesehen, dass die Al-Zn-Basislegierung einen Zinkanteil von 0,8 Gew.-% bis 12,0 Gew.-% aufweist. Eine Festigkeit der Legierung ist dann besonders erhöht, wodurch zwar deren Bearbeitbarkeit etwas schwieriger ist, aber das Profil besonders fein ausgebildet werden kann. Auch sehr komplex geformte Profile können dann mit hoher Präzision in die Mantelfläche der Prägewalze eingearbeitet werden.

Als praktikable Alternative hat es sich bewährt, wenn die Mantelfläche der Prägewalze bzw. Prägehülse aus einem Schnellarbeitsstahl gefertigt ist. Schnellarbeitsstähle ermöglichen aufgrund deren ausgesprochen guten Schleifbarkeit bei gleichzeitig hoher Härte eine präzise Bearbeitbarkeit. Als besonders geeignet hat sich hierzu ein Schnellarbeitsstahl aufweisend (in Gew.-%): 1,5 bis 2,2 % C; 0,45 bis 0,55 % Si; 0,25 bis 0,35 % Mn; 3,6 bis 5,0 % Cr; 1,7 bis 3,0 % Mo; 4,5 bis 5,5 % V; 10,0 bis 14,5 % W; 7,5 bis 11,5 Co; Rest Fe und herstellungsbedingte Verunreinigungen, erwiesen.

Ein Einarbeiten des Profils in die Mantelfläche der Prägewalze erfolgt in der Regel mit üblichen Methoden des Zerspanens, wie beispielsweise Fräsen, Drehen und Schleifen. Auch Prägen und/oder Laserablation haben sich hierzu als geeignet erwiesen.

Vorteilhaft kann es sein, wenn mehrere Prägewalzen bzw. Prägehülsen vorgesehen sind, um die berechnete Struktur in die Folie bzw. in eine oder beide Oberflächen der Folie einzuprägen. Dies ermöglicht es, insbesondere beide Oberflächen der Folie gleichzeitig zu bearbeiten bzw. in beide Oberflächen der Folie gleichzeitig die berechnete Struktur einzuprägen, wenn die Prägewalzen bzw. Prägehülsen eng beabstandet voneinander angeordnet sind und die Folie zwischen diesen durchgeführt wird. Es versteht sich, dass sich die in die beiden Oberflächen der Folie eingeprägten Ausformungen der Struktur üblicherweise voneinander unterscheiden. Die Prägewalzen sind hierzu üblicherweise im Rahmen eines sogenannten Prägekalanders angeordnet.

Es hat sich bewährt, dass die Folie mit einem Extrusionsprozess hergestellt wird, wobei ein Granulat, in der Regel ein Kunststoffgranulat, erwärmt und anschließend durch eine formgebende Öffnung bzw. Matrize gepresst wird. Der Herstellungsprozess kann besonders effizient erfolgen, wenn das Einprägen der berechneten Struktur an den Extrusionsprozess anschließend vorgesehen ist. Insbesondere wenn das Einprägen ein Erwärmen der Folie vorsieht, kann eine Produktion der Lichtlenkfolie dadurch zeitoptimiert und/oder energieeffizient durchgeführt werden.

Die Folie bzw. Lichtlenkfolie wird üblicherweise mit Kunststoff gebildet. Als geeignet erwiesen haben sich hierzu insbesondere Polyamide, Polyurethane, Polyester, Polyolefine, Polycarbonate, Polymethylmethacrylate und/oder Acrylnitril-Butadien-StyrolCopolymere.

Die Bildung der Folie bzw. Lichtlenkfolie mit Kunststoff ermöglicht insbesondere eine gute Formbarkeit, wodurch die Lichtlenkfolie mit einer weitgehend beliebigen Krümmung hergestellt werden kann. Vorteilhaft ist es deshalb, wenn die Folie gekrümmt ausgebildet wird. Auf diese Weise kann eine in einer Arbeitsposition der Lichtlenkfolie erforderliche Krümmung der Lichtlenkfolie schon im Rahmen der Herstellung der Lichtlenkfolie berücksichtigt werden. Ein Einbringen einer Krümmung in die Lichtlenkfolie erfolgt dabei in der Regel mit einem Erwärmen der Lichtlenkfolie sowie gleichzeitigem und/oder anschließendem Verbiegen der Lichtlenkfolie. Zum Beispiel kann vorgesehen sein, dass die Lichtlenkfolie in der Arbeitsposition eine Lichtquelle umhüllen soll. Zweckmäßig wird die Lichtlenkfolie dann entsprechend der Form der Lichtquelle gekrümmt ausgebildet, sodass ein späteres zusätzliches Verformen bzw. Verbiegen, welches grundsätzlich aufgrund der üblicherweise großen Elastizität der Lichtlenkfolie möglich ist, nicht oder nur in geringem Maße erforderlich wird und damit spätere Biegebelastungen auf die Lichtlenkfolie vorteilhaft reduziert sind.

Insbesondere wenn die Lichtlenkfolie gekrümmt ausgebildet wird und/oder in einer Arbeitsposition stark gekrümmt wird, beeinflusst dies eine durch die Lichtlenkfolie verursachte Lichtlenkung. Zweckmäßig ist es daher, wenn ein Berechnen der Struktur im Schritt b) abhängig von einer Krümmung der Lichtlenkfolie in einer Arbeitsposition der Lichtlenkfolie erfolgt, um die vorgegebene Lichtstärkeverteilung zu erreichen. Dadurch wird die Lichtlenkfolie weiter auf den Einsatzzweck hin abgestimmt und eine präzise Lichtformung durch die Lichtlenkfolie erreicht bzw. sichergestellt.

Zur Änderung der Lichtstärkeverteilung kann vorgesehen sein, dass das Licht durch die Lichtlenkfolie transmittiert wird und an der Struktur gebrochen wird. Eine Änderung der Richtung des auf die Struktur auftreffenden Lichtes erfolgt dann durch Lichtbrechung. Die Lichtlenkfolie wirkt als Optik. Alternativ dazu kann zur Änderung der Lichtstärkeverteilung vorgesehen sein, dass das Licht an der Struktur reflektiert wird. Eine Änderung der Richtung des auf die Struktur auftreffenden Lichtes erfolgt dann durch Lichtreflexion. Die Lichtlenkfolie wirkt als Reflektor. Ist vorgesehen, dass das Licht an der Struktur reflektiert wird, ist es zweckmäßig, wenn die Struktur reflektierend ausgebildet wird. Dies kann beispielsweise erfolgen, indem die Folie aus einem reflektierendem Material hergestellt und/oder auf eine Oberfläche der Folie bzw. die Struktur eine Reflexionsschicht aufgebracht ist. Die Reflexionsschicht kann beispielsweise mit Aluminium oder Silber gebildet sein. Vorteilhaft ist es, wenn die Reflexionsschicht hochreflektierend ausgebildet wird. Dadurch kann, insbesondere durch Totalreflexion, eine präzise Lichtlenkung erreicht werden. Als günstig hat es sich erwiesen, wenn die Reflexionsschicht färbig ausgebildet wird, wodurch eine spektrale Zusammensetzung eines an der Reflexionsschicht reflektierten Lichtes beeinflusst werden kann.

Grundsätzlich wird die Lichtlenkfolie je nach geplantem Einsatzzweck transparent bzw. teiltransparent ausgebildet. Denkbar ist, dass eine Reflexion des Lichtes an der Lichtlenkfolie erfolgt, indem das Licht durch eine der Lichtquelle zugewandten Oberfläche der Lichtlenkfolie hindurchtritt und erst an einer der Lichtquelle abgewandten Oberfläche der Lichtlenkfolie reflektiert wird.

Günstig kann es sein, wenn die Lichtlenkfolie mit Bereichen unterschiedlicher Transparenz ausgebildet wird. Auf diese Weise kann eine Intensität der Lichtstärkeverteilung, insbesondere raumwinkelabhängig, beeinflusst werden. Die Bereiche können je nach Anforderungen transparent, teiltransparent oder nicht transparent ausgebildet werden. Denkbar ist aber auch, dass bereichsweise eine Schicht eines Materials, beispielsweise eine Kunststoffschicht, auf die Lichtlenkfolie bzw. die Folie aufgebracht wird, wobei diese Schicht teiltransparent oder nicht transparent ausgebildet ist. Eine nicht transparente Schicht kann aus einem reflektierenden Material, beispielsweise einer Metallschicht, etwa Aluminium oder Silber, gebildet werden.

Mit Vorteil kann vorgesehen sein, dass Partikel in die Lichtlenkfolie bzw. die Folie eingebracht und/oder auf die Lichtlenkfolie bzw. die Folie aufgebracht werden, um eine Transparenz eines Bereiches zu beeinflussen. Je nach Partikeldichte kann eine unterschiedliche Transparenz eingestellt werden. Um Bereiche unterschiedlicher Transparenz auszubilden, können die Partikel inhomogen verteilt angeordnet werden. Üblicherweise weisen die Partikel eine durchschnittliche Größe auf, die größer als eine durchschnittliche Wellenlänge des Lichtes der Lichtquelle ist, wodurch eine notwendige Partikeldichte zur Erreichung einer gewünschten Transparenz leichter eingestellt werden kann. Um eine Lichtfarbe bzw. eine spektrale Zusammensetzung des Lichtes zu beeinflussen, können die Partikel eine bestimmte Farbe aufweisen.

Um unerwünschte Reflexionen bei einem Eintritt des Lichtes in die Lichtlenkfolie zu vermeiden bzw. zu vermindern bzw. eine Transmission durch die Lichtlenkfolie zu erhöhen, ist es günstig, wenn eine Antireflexbeschichtung auf eine Oberfläche der Folie aufgebracht wird. Zweckmäßig wird hierzu vorgesehen, dass die Antireflexbeschichtung einen Brechungsindex aufweist, welcher kleiner als der Brechungsindex der Folie und größer als der Brechungsindex einer Umgebungsatmosphäre, üblicherweise Luft, ist. Bevorzugt wird die Antireflexbeschichtung mit mehreren Schichten mit unterschiedlichen Brechungsindizes ausgebildet, wodurch unerwünschte Reflexionen über eine breiten Wellenlängenbereich und/oder Einfallswinkelbereich des Lichtes vermindert werden können. Üblicherweise wird die Antireflexbeschichtung hierzu auf eine der Lichtquelle zugewandten Oberfläche der Folie aufgebracht.

Vorteilhaft ist es, wenn die Lichtlenkfolie bereichsweise phototrop ausgebildet wird oder zumindest bereichsweise eine phototrope Schicht auf die Lichtlenkfolie bzw. Folie aufgebracht wird. Dadurch kann das Transmissionsverhalten der Lichtlenkfolie abhängig von einer spektralen Zusammensetzung des Lichtes geändert werden. Phototrop bezeichnet eine Eigenschaft von bestimmten Molekülen, bei Einwirkung von elektromagnetischer Strahlung eines bestimmten Wellenlängenbereiches deren Absorptionseigenschaften zu ändern. Bekannt ist dies etwa von selbsttönenden Sonnenbrillen. Praktisch umgesetzt wird dies beispielsweise durch ein Einbringen von phototropen Substanzen in ein Glas oder Kunststoff. Um beispielsweise eine Erhöhung einer Absorption bei einem Einwirken von Licht im Spektralbereich von UV-Licht oder kurzwelligem blaufarbigen Licht zu erreichen, werden üblicherweise Indolino-Spironaphthoxazine als phototrope Substanz verwendet. So können zum Beispiel Indolino-Spironaphthoxazine zumindest bereichsweise in die Lichtlenkfolie bzw. die Folie eingebracht oder auf die Lichtlenkfolie bzw. die Folie aufgebracht werden, um eine Lichtstärkeverteilung von Licht zu ändern, welches in dessen elektromagnetischem Wellenspektrum einen Anteil von ultraviolettem Licht aufweist. Wird beispielsweise die Lichtlenkfolie verwendet, um eine Lichtstärkeverteilung von Sonnenlicht für eine optimierte Beleuchtung anzupassen, kann auf diese Weise bei einer unerwünscht starken Sonnenlichtintensität ein automatisches Abdunkeln vorgesehen werden.

Günstig ist es, wenn die Erhöhungen in Draufsicht auf die Folie als Anordnung von konzentrischen Ringen und/oder parallelen Streifen ausgebildet werden. Eine derartige Anordnung hat sich insbesondere bei einer symmetrisch geformten vorgegebenen Lichtstärkeverteilung als praktikabel herausgestellt. Ein Ausbilden als Anordnung von konzentrischen Ringen hat sich insbesondere bei einer eher rotationssymmetrisch geformten Abstrahlcharakteristik bewährt, ein Ausbilden als Anordnung von parallelen Streifen insbesondere bei eher spiegelsymmetrisch geformten Abstrahlcharakteristiken. Eine genaue Form der Erhöhungen sowie eine Beanstandung der Ringe bzw. Streifen ergibt sich allerdings erst durch Berechnen der Struktur abhängig von einem Abstand zwischen Lichtquelle und Lichtlenkfolie sowie einer Abstrahlcharakteristik der Lichtquelle.

Erfindungsgemäß ist vorgesehen, dass zumindest eine Erhöhung, vorzugsweise eine Vielzahl von Erhöhungen, in einem ersten zu einer Oberfläche der Folie vertikalen Querschnitt mit einer Außenkontur mit variierenden Krümmungen ausgebildet wird. Es hat sich gezeigt, dass mit einer oder mehreren derartig geformten Erhöhungen eine Lichtstärkeverteilung der Lichtquelle entsprechend einer vorgegebenen Lichtstärkeverteilung mit hoher Genauigkeit angepasst werden kann. Eine präzise Anpassung wird insbesondere dadurch erreicht, dass eine Vielzahl von Erhöhungen derartig ausgebildet wird. Zudem werden dadurch Kanten und/oder Spitzen in der Außenkontur vermieden, wodurch eine unerwünschte Lichtstreuung vermindert wird.

Bevorzugt ist es, wenn die zumindest eine Erhöhung, vorzugsweise mehrere Erhöhungen, im ersten zu einer Oberfläche der Folie vertikalen Querschnitt mit einer Außenkontur ausgebildet wird, welche als Segment einer Ellipse oder Parabel geformt ist. Dies ermöglicht ein präzises Formen bzw. Umlenken des auf die Struktur auftreffenden Lichtes. Zudem können die Erhöhungen dadurch, insbesondere aufgrund deren stetigen Krümmungsänderungen, robust und mit relativ geringen Nachbearbeitungserfordernissen ausgebildet werden. Ein Ausbilden der Außenkontur als Segment einer Ellipse hat sich besonders bewährt, wenn starke Richtungsänderungen bzw. komplexere vorgegebene Lichtstärkeverteilungen erreicht werden sollen. Ein Ausbilden der Außenkontur als Segment einer Parabel ist besonders geeignet, um gerichtete bzw. kleinwinkeligere Lichtstärkeverteilungen zu erzeugen. Um Lichtstärkeverteilungen zu erreichen, welche mehrere Lichtstärkemaxima aufweisen, ist es günstig, wenn mehrere Erhöhungen mit einer Außenkontur ausgebildet werden, welche als Segment einer Ellipse oder Parabel geformt sind. Es versteht sich, dass es vorteilhaft sein kann, wenn die mehreren Erhöhungen dabei mit unterschiedlich geformten Außenkonturen ausgebildet werden bzw. die Außenkonturen der Erhöhungen als Segmente von unterschiedlichen Ellipsen oder Parabeln bzw. von verschiedenen Segmenten der gleichen Ellipse oder Parabel geformt werden. Insbesondere flügelartige Lichtstärkeverteilungen, sogenannte Batwing-Verteilungen, können auf diese Weise mit komplexer Form gebildet werden.

Vorteilhaft ist es, wenn die zumindest eine Erhöhung in einem zweiten zu einer Oberfläche der Folie vertikalen Querschnitt, welcher rechtwinklig zum ersten vertikalen Querschnitt ausgerichtet ist, mit einer Außenkontur mit variierenden Krümmungen ausgebildet wird. Dadurch wird ermöglicht, dass insbesondere eine zu erreichende Lichtstärkeverteilung, welche sehr komplex geformt ist, formgenau ausgebildet werden kann und zudem eine Anpassung an die Abstrahlcharakteristik der Lichtquelle besonders optimiert durchgeführt werden kann. Bevorzugt ist zudem wieder vorgesehen, dass die zumindest eine Erhöhung im zweiten vertikalen Querschnitt, mit einer Außenkontur ausgebildet wird, welche als Segment einer Ellipse oder Parabel geformt ist. Auf diese Weise können Wirkungen analog zu den vorgenannten Wirkungen bei der Ausbildung der Außenkontur im ersten vertikalen Querschnitt erreicht werden, welche allerdings besonders optimiert sind. Insbesondere kann dadurch die Erhöhung mit einer sehr robusten Außenfläche ausgebildet werden, welche, insbesondere aufgrund deren üblicherweise stetigen Krümmungsänderungen, eine geringe Anfälligkeit gegenüber Verschleiß aufweist. Es versteht sich, dass die Außenkonturen im ersten und im zweiten zu einer Oberfläche der Folie vertikalen Querschnitt bevorzugt eine unterschiedliche Gestalt aufweisen, wodurch eine Form der Erhöhung besonders gut auf die vorgegebene Lichtstärkeverteilung sowie die Abstrahlcharakteristik der Lichtquelle abgestimmt werden kann.

Eine Funktionalität der Lichtlenkfolie kann dadurch erhöht werden, dass eine elektronische Schaltung in die Folie eingebracht und/oder auf die Folie aufgebracht wird, wobei die elektronische Schaltung zumindest einen Sensor aufweist, um eine Messgröße zu erfassen, und/oder zumindest einen Aktor aufweist, um eine physikalische Größe entsprechend eines Steuersignales zu ändern. Die spezielle Ausgestaltung der elektronischen Schaltung, insbesondere des Sensors und/oder des Aktors, hängt von einem jeweiligen Einsatzzweck der Lichtlenkfolie ab. So kann die Lichtlenkfolie bzw. deren elektronische Schaltung in einer Arbeitsposition als Teil eines Steuerungs- oder Regelsystems einer Leuchte fungieren, wobei die elektronische Schaltung der Lichtlenkfolie von der Leuchte gesteuert und/oder mit Energie versorgt wird.

Es versteht sich, dass dem Fachmann klar ist, dass der Begriff elektronische Schaltung in diesem Zusammenhang sowohl elektronische Schaltung, elektrische Schaltung als auch mikroelektronische Schaltung und/oder mikroelektrische Schaltung umfasst.

Um eine autarke Energieversorgung der elektronischen Schaltung zu ermöglichen, ist es günstig, wenn die elektronische Schaltung einen Energiespeicher umfasst, beispielsweise einen Kondensator, einen Akkumulator oder eine Batterie. Günstig kann es sein, wenn eine Energieversorgung durch Induktion erfolgt. Zweckmäßig kann die elektronische Schaltung eine photovoltaische Zelle bzw. ein Photoelement aufweisen, um einen Energiespeicher der elektronischen Schaltung mit Energie zu versorgen.

Mit Vorteil ist vorgesehen, dass elektrische Leitungen der elektronischen Schaltung transparent oder teiltransparent ausgebildet werden. Dadurch kann eine Beeinflussung einer Lichtlenkfunktion der Lichtlenkfolie gezielt gesteuert werden. Hierzu können die elektrischen Leitungen beispielsweise mit Indiumzinnoxid, auch ITO genannt, gebildet werden. Je nach Transparenz der elektronischen Schaltung bzw. von Bauteilen der elektronischen Schaltung kann beispielsweise eine Reflexion und/oder Transmission an bzw. durch die Lichtlenkfolie beeinflusst werden. Auf diese Weise können die elektronische Schaltung bzw. deren Bauteile vorteilhaft zur Lichtlenkfunktion der Lichtlenkfolie beitragen.

Der Sensor kann beispielsweise als Temperatursensor, Helligkeitssensor, Wärmemengensensor, Feuchtigkeitssensor, Schallsensor, Datenerfassungssensor, Annäherungssensor usw. ausgebildet werden. Auf diese Weise kann die Lichtlenkfolie in einer Arbeitsposition, gegebenenfalls unter Wechselwirkung mit weiteren Bauelementen und/oder Steuerungssystemen, beispielsweise eine Funktion eines Bewegungsmelders, Anwesenheitsmelders, Feuermelders und/oder einer Datenerfassungseinheit verwirklichen.

Zweckmäßig ist es, wenn der Aktor als Anzeigeelement ausgebildet wird, beispielsweise um einen Status der elektrischen Schaltung anzuzeigen. Es versteht sich, dass es vorgesehen sein kann, dass die elektronische Schaltung mehrere unterschiedliche Sensoren und/oder Aktoren umfasst.

Günstig ist es, wenn die elektronische Schaltung mit einem Eingabeelement ausgebildet wird, sodass eine Interaktion mit einem Benutzer ermöglicht wird. Das Eingabeelement kann hierzu zweckmäßig als Annäherungssensor oder Drucksensor ausgebildet werden. Als geeignete Verfahren, um die elektronische Schaltung bzw. Bauteile der elektronischen Schaltung in die Folie einzubringen und/oder auf die Folie aufzubringen, haben sich Druckverfahren, Klemmverfahren und/oder Lötverfahren erwiesen. Vorteilhaft ist es, wenn die elektronische Schaltung bzw. Bauteile der elektronischen Schaltung auf die Folie aufgedruckt werden. Insbesondere kann vorgesehen sein, dass Bauteile der elektronischen Schaltung bei der Herstellung der Folie, etwa im Rahmen eines Extrusionsprozesses, in die Folie eingebracht werden. So können etwa Bauteile der elektronischen Schaltung einem Granulat beigefügt werden, welches mit dem Extrusionsprozess zu einer Folie verarbeitet wird.

Entsprechend den erfindungsgemäß vorgesehenen Ausführungen, Merkmalen und Wirkungen eines vorstehend beschriebenen Verfahrens zur Herstellung einer Beleuchtungsvorrichtung wird eine optimierte Änderung einer Lichtstärkeverteilung der Beleuchtungsvorrichtung ermöglicht. Auf diese Weise kann eine Beleuchtungsvorrichtung hergestellt werden, welche eine präzise Formung des von der Lichtquelle emittierten Lichtes entsprechend einer vorgegebenen Lichtstärkeverteilung ermöglicht.

Vorteilhaft ist es, wenn die Struktur der Lichtlenkfolie in eine in einem Arbeitszustand der Beleuchtungsvorrichtung einem Leuchtmittel abgewandten ersten Oberfläche der Lichtlenkfolie eingebracht und ausgebildet wird, von dem Leuchtmittel emittiertes Licht derart in Richtung einer zweiten Oberfläche der Lichtlenkfolie zu leiten, dass das Licht mit einer Totalreflexion an der zweiten Oberfläche reflektiert wird und anschließend von der Beleuchtungsvorrichtung zur Beleuchtung abgestrahlt wird. Dadurch kann das vom Leuchtmittel emittierte Licht aufgeweitet und insbesondere homogenisiert werden, sodass in Folge eine gleichmäßige Abstrahlung und/oder insbesondere präzise Lichtlenkung mit der Lichtlenkfolie erreichbar ist, da ungewollte Lichtinhomogenitäten bzw. eine komplexe Abstrahlcharakteristik eines vom Leuchtmittel emittierten Lichtes, insbesondere durch Mehrfachreflexionen innerhalb der Lichtlenkfolie, geglättet werden können.

Um die Lichtlenkfolie auf einen Einsatz in der Beleuchtungsvorrichtung hin abzustimmen, ist es erfindungsgemäß, wenn ein Berechnen der Struktur im Schritt b) des Verfahrens zur Herstellung der Lichtlenkfolie abhängig von einem Abstand zwischen Lichtlenkfolie und Leuchtmittel erfolgt, um die vorgegebene Lichtstärkeverteilung zu erreichen. Bevorzugt ist vorgesehen, dass ein Berechnen der Struktur im Schritt b) des Verfahrens zur Herstellung der Lichtlenkfolie abhängig von einer Position des Leuchtmittels relativ zur Lichtlenkfolie erfolgt, um die vorgegebene Lichtstärkeverteilung zu erreichen. Dadurch kann die Lichtlenkfolie bzw. deren Struktur besonders präzise auf den Einsatzzweck in der Beleuchtungsvorrichtung abgestimmt und eine große Präzision bei einer Umleitung des Lichtes erreicht werden.

Es versteht sich, dass das erfindungsgemäße Verfahren zur Herstellung einer Beleuchtungsvorrichtung entsprechend bzw. analog den Merkmalen, Vorteilen und Wirkungen, welche im Rahmen einer erfindungsgemäßen Beleuchtungsvorrichtung, insbesondere nachstehend, beschrieben sind, ausgebildet sein kann. Analoges gilt auch für die erfindungsgemäße Beleuchtungsvorrichtung im Hinblick auf ein, insbesondere vorstehend beschriebenes, erfindungsgemäßes Verfahren zur Herstellung einer Beleuchtungsvorrichtung.

Nutzbringend kann nicht als Teil der Erfindung ein Verfahren zur Herstellung eines Solarmodules zur Speicherung bzw. Umwandlung von Sonnenenergie vorgesehen sein, wobei das Solarmodul zumindest ein Lichtenergieumwandelelement, wie eine Solarzelle, sowie eine Lichtlenkfolie zur Änderung einer Lichtstärkeverteilung von Sonnenlicht aufweist, um Sonnenlicht mit der Lichtlenkfolie in Richtung des zumindest einen Lichtenergieumwandelelementes zu lenken, wobei die Lichtlenkfolie mit einem erfindungsgemäßen Verfahren zur Herstellung einer Lichtlenkfolie hergestellt wird. Entsprechend den erfindungsgemäß vorgesehenen Ausführungen, Merkmalen und Wirkungen eines vorstehend beschriebenen Verfahrens zur Herstellung einer Lichtlenkfolie wird eine optimierte Änderung bzw. Formung einer Abstrahlcharakteristik bzw. Lichtstärkeverteilung von in einem Arbeitszustand des Solarmodules auf die Solarzelle bzw. deren Lichtlenkfolie auftreffendem Sonnenlicht ermöglicht, indem die Lichtlenkfolie des Solarmodules mit einem erfindungsgemäßen Verfahren hergestellt wird. Auf diese Weise kann ein Solarmodul hergestellt werden, welches eine präzise Formung des auf das Solarmodul bzw. deren Lichtlenkfolie auftreffenden Sonnenlichtes entsprechend einer vorgegebenen Lichtstärkeverteilung ermöglicht, um dieses optimiert in Richtung bzw. auf das Lichtenergieumwandelelement zu leiten. Dadurch kann in einem Arbeitszustand des Solarmodules, in welchem dieses von einem Sonnenlicht einer Sonne beleuchtet wird, ein besonders großer Lichtstrom des Sonnenlichtes auf das Lichtenergieumwandelelement geleitet werden, um eine große Menge an Sonnenergie mit dem Lichtenergieumwandelelement in nutzbare Energie umzuwandeln bzw. als solche zu speichern.

Vorteilhaft ist es, wenn die Struktur der Lichtlenkfolie in eine in einem Arbeitszustand des Solarmodules einer Sonne zugewandten ersten Oberfläche der Lichtlenkfolie eingebracht und ausgebildet wird, im Arbeitszustand auf die Lichtlenkfolie auftreffendes Sonnenlicht derart in Richtung einer zweiten Oberfläche der Lichtlenkfolie zu leiten, dass das Sonnenlicht über eine Totalreflexion an der zweiten Oberfläche in Richtung des zumindest einen Lichtenergieumwandelelementes leitbar ist bzw. geleitet wird. Dadurch kann ein besonders großer Lichtstrom in Richtung des bzw. auf das Lichtenergieumwandelelement umgeleitet werden. Praktikabel ist dies umsetzbar, wenn die Struktur in die erste Oberfläche der Lichtlenkfolie eingebracht wird und die zweite Oberfläche der Folie im Wesentlichen eben ausgebildet wird. Um eine besonders effiziente Lichtumlenkung in Richtung Lichtenergieumwandelelement zu erreichen, kann es aber auch günstig sein, wenn die Struktur in die erste und zweite Oberfläche eingebracht wird. Es versteht sich, dass sich die in die erste Oberfläche und zweite Oberfläche der Folie eingeprägten Ausformungen der Struktur in der Regel voneinander unterscheiden. Üblicherweise ist die zweite Oberfläche der Lichtlenkfolie auf einer im Arbeitszustand der Sonne abgewandten Seite der Lichtlenkfolie angeordnet.

Um die Lichtlenkfolie auf einen Einsatz im Solarmodul hin abzustimmen, ist es zweckmäßig, wenn ein Berechnen der Struktur im Schritt b) des Verfahrens zur Herstellung der Lichtlenkfolie abhängig von einem Abstand zwischen Lichtlenkfolie und Lichtenergieumwandelelement erfolgt, um die vorgegebene Lichtstärkeverteilung zu erreichen. Bevorzugt ist vorgesehen, dass ein Berechnen der Struktur im Schritt b) des Verfahrens zur Herstellung der Lichtlenkfolie abhängig von einer Position des Lichtenergieumwandelelementes relativ zur Lichtlenkfolie erfolgt, um die vorgegebene Lichtstärkeverteilung zu erreichen. Dadurch kann die Lichtlenkfolie bzw. deren Struktur besonders präzise auf den Einsatzzweck im Solarmodul abgestimmt und eine große Effizienz bei einer Umleitung von Sonnenlicht in Richtung Lichtenergieumwandelelement erreicht werden.

Günstig ist es, wenn das zumindest eine Lichtenergieumwandelelement als Solarzelle oder Solarzellenstreifen ausgebildet wird bzw. ist, um Sonnenlicht in elektrische Energie umzuwandeln.

Eine einfache Herstellbarkeit wird erreicht, wenn als Solarzellen bzw. Solarzellenstreifen ausgebildete Lichtenergieumwandelelemente, zumindest teilweise, bevorzugt gänzlich, auf die Lichtlenkfolie bzw. in deren Ausschnitte gedruckt werden. Dies kann beispielsweise mit einem 3-D-Drucker erfolgen, welcher insbesondere ausgebildet ist, um Schichten einer Solarzelle bzw. eines Solarzellenstreifens, üblicherweise zeitlich nacheinander, auf eine Lichtlenkfolie aufzubringen bzw. aufzudrucken.

Es versteht sich, dass das Verfahren zur Herstellung eines Solarmodules entsprechend bzw. analog den Merkmalen, Vorteilen und Wirkungen, welche im Rahmen eines Solarmodules, insbesondere nachstehend, beschrieben sind, ausgebildet sein kann. Analoges gilt auch für das Solarmodul im Hinblick auf ein, insbesondere vorstehend beschriebenes, Verfahren zur Herstellung eines Solarmodules.

Indem zumindest eine Erhöhung, vorzugsweise eine Vielzahl von Erhöhungen, in einem ersten zu einer Oberfläche der Folie vertikalen Querschnitt mit einer Außenkontur mit variierenden Krümmungen ausgebildet ist, ist es ermöglicht, dass eine zu erreichende Lichtstärkeverteilung sehr formgenau ausgebildet werden kann. Zudem können derartig geformte Erhöhungen auf bestimmte Abstrahlcharakteristiken von Lichtquellen optimiert angepasst geformt sein, wodurch die zu erreichende Lichtstärkeverteilung besonders präzise erreichbar ist.

Mit Vorteil ist vorgesehen, dass eine Oberfläche der Lichtlenkfolie mit einer mittleren Rauheit Rₐ, auch Mittelrauwert genannt, zwischen 0,4 µm und 0,9 µm und/oder einer gemittelten Rautiefe R_{z}, auch Zehnpunkthöhe genannt, zwischen 3 µm und 7 µm ausgebildet ist. Dadurch wird eine Homogenisierung des auf die Lichtlenkfolie und/oder die Struktur auftreffenden Lichtes erreicht und insbesondere unerwünschte raumwinkelabhängige Intensitätsschwankungen in der durch die Lichtlenkfolie geformten Lichtstärkeverteilung minimiert. Als besonders praktikabel haben sich dabei eine mittlere Rauheit zwischen 0,5 µm und 0,7 µm und/oder eine gemittelten Rautiefe zwischen 4 µm und 5 µm herausgestellt. Rauheitswerte in diesem Bereich ermöglichen eine ausreichende Homogenisierung, ohne dass dabei gleichzeitig durch die Rauheit verursachte Streueffekte berücksichtigt werden müssen.

Bevorzugt ist vorgesehen, dass die zumindest eine Erhöhung, vorzugsweise mehrere Erhöhungen, im ersten zu einer Oberfläche der Folie vertikalen Querschnitt mit einer Außenkontur ausgebildet ist, welche als Segment einer Ellipse oder Parabel geformt ist. Eine derartige Außenkontur ermöglicht ein präzises Formen bzw. Umlenken des auf die Erhöhung auftreffenden Lichtes und ist zudem mit reduziertem Arbeitsaufwand herstellbar, insbesondere wenn eine Herstellung mit einer Prägewalze erfolgt. Zudem weist eine derartig geformte Außenkontur aufgrund deren stetigen Krümmungsänderungen eine hohe Robustheit auf, sodass Verschleißerscheinungen reduziert sind. Eine Außenkontur, welche als Segment einer Ellipse ausgebildet ist, hat sich besonders bewährt, wenn starke Richtungsänderungen bzw. komplexere vorgegebene Lichtstärkeverteilungen erreicht werden sollen. Ein Ausbilden der Außenkontur als Segment einer Parabel ist besonders geeignet, um gerichtete bzw. kleinwinkeligere Lichtstärkeverteilungen zu erzeugen.

Vorteilhaft ist es, wenn die zumindest eine Erhöhung in einem zweiten zu einer Oberfläche der Folie vertikalen Querschnitt, welcher rechtwinklig zum ersten vertikalen Querschnitt ausgerichtet ist, mit einer Außenkontur mit variierenden Krümmungen ausgebildet ist. Dadurch ist ermöglicht, dass insbesondere eine zu erreichende Lichtstärkeverteilung, welche sehr komplex geformt ist, formgenau ausgebildet werden kann und zudem eine Anpassung an bestimmte Abstrahlcharakteristiken besonders optimiert durchführbar ist. Bevorzugt ist zudem wieder vorgesehen, dass die zumindest eine Erhöhung im zweiten vertikalen Querschnitt, mit einer Außenkontur ausgebildet ist, welche als Segment einer Ellipse oder Parabel geformt ist. Auf diese Weise werden Wirkungen analog zu den vorgenannten Wirkungen bei der Ausbildung der Außenkontur im ersten vertikalen Querschnitt erreicht, welche allerdings besonders optimiert sind. Insbesondere kann dadurch die Erhöhung mit einer sehr robusten Außenfläche ausgebildet werden, welche, insbesondere aufgrund deren üblicherweise stetigen Krümmungsänderungen, eine geringe Anfälligkeit gegenüber Belastungen aufweist.

Bevorzugt ist vorgesehen, dass die Außenkonturen im ersten und im zweiten zu einer Oberfläche der Folie vertikalen Querschnitt eine unterschiedliche Gestalt aufweisen, wodurch eine Form der Erhöhung besonders gut auf eine zu erreichende Lichtstärkeverteilung sowie eine Abstrahlcharakteristik der Lichtquelle abstimmbar ist.

Es versteht sich, dass die Lichtlenkfolie entsprechend bzw. analog den erfindungsgemäßen Ausgestaltungen, Merkmalen, Formen und/oder Ausprägungen und mit den entsprechenden korrespondierenden vorteilhaften Wirkungen, welche im Rahmen des erfindungsgemäßen Verfahrens zur Herstellung einer Beleuchtungsvorrichtung vorstehend beschrieben sind, ausgebildet sein kann. In Bezug auf weitere erfindungsgemäße Ausgestaltungen, Formen und/oder Ausprägungen der Lichtlenkfolie sowie deren vorteilhaften Wirkungen darf also insbesondere auf die vorstehenden Absätze verwiesen werden.

Das Ziel der Erfindung wird mit einer Beleuchtungsvorrichtung der eingangs genannten Art dadurch gelöst, dass die Struktur ausgebildet ist, vom Leuchtmittel emittiertes Licht derart in Richtung einer zweiten Oberfläche der Lichtlenkfolie zu leiten, dass das Licht mit einer Totalreflexion an der zweiten Oberfläche reflektierbar ist und anschließend von der Beleuchtungsvorrichtung für eine Beleuchtung abstrahlbar ist. Entsprechend den Ausführungen, Merkmalen und Wirkungen der Lichtlenkfolie, ist dadurch eine optimierte Änderung bzw. Formung einer Lichtstärkeverteilung der Beleuchtungsvorrichtung ermöglicht. Zweckmäßig kann die Lichtlenkfolie dabei als Optik ausgebildet sein, wobei eine Lichtstärkeverteilung eines von einer Lichtquelle oder eines Leuchtmittels der Beleuchtungsvorrichtung emittierten Lichtes geändert wird, indem das Licht durch die Lichtlenkfolie transmittiert wird, wobei das Licht an der Struktur der Lichtlenkfolie gebrochen wird. Alternativ kann die Lichtlenkfolie dabei als Reflektor ausgebildet sein, wobei das Licht durch die Lichtlenkfolie bzw. an der Struktur der Lichtlenkfolie reflektiert wird.

Günstig ist es, wenn die Lichtlenkfolie zumindest eine Aufnahme aufweist, in welcher zumindest das Leuchtmittel angeordnet ist, sodass das Leuchtmittel zumindest teilweise, insbesondere gänzlich, versenkt in der Lichtlenkfolie angeordnet ist. Dadurch ist eine positionsgenaue Anordnung des Leuchtmittels relativ zur Lichtlenkfolie bzw. deren Struktur umsetzbar, sodass die Struktur der Lichtlenkfolie auf eine Position, sowie insbesondere Form und/oder Größe, des Leuchtmittels abgestimmt werden kann, um eine präzise Lichtlenkung umzusetzen. Ein zumindest teilweise, bevorzugt gänzlich, versenktes Anordnen des Leuchtmittels in der Lichtlenkfolie schützt zudem das Leuchtmittel bzw. dessen Oberfläche vor Verschmutzungen und ermöglicht eine besonders kompakte Ausbildung der Beleuchtungsvorrichtung.

Erfindungsgemäß ist vorgesehen, dass die Struktur der Lichtlenkfolie in eine erste Oberfläche der Lichtlenkfolie eingebracht und ausgebildet ist, von einem Leuchtmittel der Beleuchtungsvorrichtung, emittiertes Licht derart in Richtung einer zweiten Oberfläche der Lichtlenkfolie zu leiten, dass das Licht mit einer Totalreflexion an der zweiten Oberfläche reflektierbar ist bzw. reflektiert wird und anschließend von der Beleuchtungsvorrichtung für eine Beleuchtung abstrahlbar ist bzw. abgestrahlt wird. Dadurch kann das vom Leuchtmittel emittierte Licht aufgeweitet und insbesondere homogenisiert werden, sodass eine gleichmäßige Abstrahlung und/oder insbesondere präzise Lichtlenkung mit der Lichtlenkfolie erreichbar ist, da ungewollte Lichtinhomogenitäten bzw. eine komplexe Abstrahlcharakteristik des Leuchtmittels geglättet werden können. Günstig ist es, wenn die Struktur dabei derart ausgebildet ist, dass zumindest mehr als 20 %, insbesondere mehr als 30 %, bevorzugt mehr als 40 %, des vom Leuchtmittel auf die erste Oberfläche abgestrahlten Lichtstromes für eine Totalreflexion an der zweiten Oberfläche in Richtung der zweiten Oberfläche leitbar ist bzw. geleitet wird. Je nach konkretem Anwendungszweck kann es aber auch vorteilhaft sein, insbesondere wenn die Beleuchtungsvorrichtung als Flächenlichtstrahler fungieren soll, wenn die Struktur derart ausgebildet ist, dass mehr als 50 %, insbesondere mehr als 80 %, bevorzugt mehr als 90 %, des vom Leuchtmittel auf die erste Oberfläche abgestrahlten Lichtstromes für eine Totalreflexion an der zweiten Oberfläche in Richtung der zweiten Oberfläche leitbar ist bzw. geleitet wird. Auf diese Weise kann die Beleuchtungsvorrichtung als besonders homogener Lichtstrahler ausgebildet werden. Für eine definierte Lichtlenkung durch die Struktur, insbesondere die Struktur der ersten Oberfläche, hat es sich bewährt, wie nachstehend ausgeführt, eine Reflexionsschicht auf die Struktur bzw. die erste Oberfläche aufgebracht ist bzw. wird.

Praktikabel ist dies umsetzbar, wenn die Struktur in die erste Oberfläche der Lichtlenkfolie eingebracht ist und die zweite Oberfläche der Folie im Wesentlichen eben ausgebildet ist. Um eine besonders effiziente Lichtumlenkung zu erreichen, kann die Struktur in die erste Oberfläche und zweite Oberfläche eingebracht sein. Es versteht sich, dass sich die in die erste Oberfläche und zweite Oberfläche eingeprägten Ausformungen der Struktur üblicherweise voneinander unterscheiden.

Insbesondere bezeichnet eine erste Oberfläche der Lichtlenkfolie eine Oberfläche der Lichtlenkfolie auf einer im Arbeitszustand dem Leuchtmittel abgewandten Seite der Lichtlenkfolie und eine zweite Oberfläche der Lichtlenkfolie eine Oberfläche der Lichtlenkfolie auf einer im Arbeitszustand dem Leuchtmittel zugewandten Seite der Lichtlenkfolie.

Zweckmäßig ist es, wenn das Licht nach einer Reflexion oder Lichtbrechung an der ersten Oberfläche, um das Licht in Richtung zweiter Oberfläche zu leiten, innerhalb der Lichtlenkfolie zur zweiten Oberfläche leitbar ist bzw. geleitet wird. Dadurch sind ungewollte Lichtstreuungen des Lichtes an Verschmutzungen reduzierbar und eine besonders effiziente Lichtlenkung, insbesondere mit einem kleinräumigen Aufbau, ermöglicht.

Günstig ist es, wenn auf die erste und/oder zweite Oberfläche der Lichtlenkfolie zumindest abschnittweise, bevorzugt gänzlich, eine Reflexionsbeschichtung aufgebracht ist. Dadurch können Mehrfachreflexionen zwischen Oberflächen der Lichtlenkfolie verstärkt werden, wodurch ein besonders ausgeprägte Homogenisierung und/oder Aufweitung des vom Leuchtmittel emittierten Lichtes erreichbar ist. Die Reflexionsbeschichtung kann beispielsweise mit Aluminium oder Silber gebildet sein. Bewährt hat es sich, dass die Reflexionsbeschichtung mit einem durchschnittlichen Reflexionsgrad größer als 30 %, insbesondere größer als 40 %, bevorzugt größer als 50 % ausgebildet ist. Um eine besonders hohe Homogenisierung zu erreichen, kann es vorteilhaft sein, wenn die Reflexionsbeschichtung stark reflektierend, insbesondere spiegelnd, ausgeführt ist. Hierfür ist es günstig, wenn die Reflexionsbeschichtung mit einem durchschnittlichen Reflexionsgrad größer als 80 %, bevorzugt größer als 90 %, ausgebildet ist. Der durchschnittliche Reflexionsgrad bezieht sich dabei üblicherweise auf einen Lichtstrom in einem für das menschliche Auge sichtbaren Bereich des vom Leuchtmittel emittierten Lichtes oder insbesondere auf einen bestimmten vorgegebenen Wellenlängenbereich des vom Leuchtmittel emittierten Lichtes. Für eine hohe Effizienz kann es zweckmäßig sein, wenn die Reflexionsbeschichtung wellenlängenselektiv ausgebildet ist, sodass nur ein oder mehrere bestimmte Wellenlängenbereiche eines auf die Reflexionsbeschichtung auftreffenden Lichtes durch die Reflexionsbeschichtung reflektiert werden. Praktikabel kann dies umgesetzt sein, indem die Reflexionsbeschichtung mit mehreren Schichten mit unterschiedlichen Brechungsindizes ausgebildet ist. Bevorzugt ist es, wenn eine vorgenannte Reflexionsbeschichtung zumindest abschnittsweise auf die erste Oberfläche aufgebracht ist, um einen Anteil des in Richtung der zweiten Oberfläche geleiteten Lichtes zu einzustellen.

Günstig kann es dabei sein, wenn mehrere Abschnitte einer auf die erste und/oder zweite Oberfläche aufgebrachten Reflexionsbeschichtung unterschiedliche Reflexionsgrade aufweisen. Üblicherweise weist eine auf die erste Oberfläche aufgebrachte Reflexionsbeschichtung einen anderen Reflexionsgrad als eine auf die zweite Oberfläche aufgebrachte Reflexionsbeschichtung auf.

Eine hohe Effizienz ist erreichbar, wenn die Beleuchtungsvorrichtung mehrere Leuchtmittel aufweist, welche bevorzugt in regelmäßigen Abständen zueinander, insbesondere in Aufnahmen der Lichtlenkfolie, an der Lichtlenkfolie angeordnet sind. Eine einfache Herstellbarkeit wird erreicht, wenn als LED ausgebildete Leuchtmittel, zumindest teilweise, bevorzugt gänzlich, auf die Lichtlenkfolie bzw. in deren Aufnahmen gedruckt werden. Dies kann beispielsweise mit einem 3-D-Drucker erfolgen, welcher insbesondere ausgebildet ist, um Schichten einer LED, üblicherweise zeitlich nacheinander, auf eine Lichtlenkfolie aufzubringen bzw. aufzudrucken.

Als besonders zweckmäßig hat sich eine Verwendung einer Lichtlenkfolie bei Solarmodulen, welche nicht Teil der Erfindung sind, herausgestellt, um das Licht einer Sonne zu verwerten. Vorteilhaft kann nicht als Teil der Erfindung ein Solarmodul zur Speicherung bzw. Umwandlung von Sonnenenergie vorgesehen sein, umfassend zumindest ein Lichtenergieumwandelelement, wie eine Solarzelle, dadurch gekennzeichnet, dass das Solarmodul eine Lichtlenkfolie aufweist, um Sonnenlicht mit der Lichtlenkfolie in Richtung des zumindest einen Lichtenergieumwandelelementes zu lenken. Entsprechend den erfindungsgemäß vorgesehenen Ausführungen, Merkmalen und Wirkungen einer Lichtlenkfolie, ist dadurch eine optimierte Änderung bzw. Formung einer Abstrahlcharakteristik bzw. Lichtstärkeverteilung von in einem Arbeitszustand des Solarmodules bzw. der Lichtlenkfolie auf die Lichtlenkfolie auftreffendem Sonnenlicht ermöglicht, um dieses optimiert in Richtung bzw. auf das Lichtenergieumwandelelement zu leiten. Dadurch kann in einem Arbeitszustand des Solarmodules, in welchem dieses zur Umwandlung von Sonnenlicht in nutzbare Energie, beispielsweise elektrische Energie und/oder Wärmeenergie, von einem Sonnenlicht einer Sonne beleuchtet wird, ein besonders großer Lichtstrom des Sonnenlichtes auf das Lichtenergieumwandelelement geleitet werden, um eine große Menge an Sonnenergie mit dem Lichtenergieumwandelelement in nutzbare Energie umzuwandeln bzw. als solche zu speichern.

Zweckmäßig kann das Lichtenergieumwandelelement als bzw. mit einer Solarzelle, um Sonnenergie in elektrische Energie umzuwandeln, oder als bzw. mit einem Solarkollektor, um Sonnenenergie in Wärmeenergie umzuwandeln, ausgebildet sein. Es kann praktikabel sein, wenn das Lichtenergieumwandelelement mit mehreren, insbesondere elektrisch miteinander verbundenen, Solarzellen gebildet ist.

Die Lichtlenkfolie kann dabei als Optik ausgebildet sein, wobei eine Lichtstärkeverteilung bzw. Abstrahlcharakteristik des von der Sonne emittierten Lichtes geändert wird, indem das Licht durch die Lichtlenkfolie transmittiert wird, wobei das Licht an der Struktur der Lichtlenkfolie gebrochen wird. Alternativ kann die Lichtlenkfolie dabei als Reflektor ausgebildet sein, wobei das Licht durch die Lichtlenkfolie bzw. an der Struktur der Lichtlenkfolie reflektiert wird.

Günstig ist es, wenn die Lichtlenkfolie zumindest einen Ausschnitt aufweist, in welchem das zumindest eine Lichtenergieumwandelelement angeordnet ist, sodass das Lichtenergieumwandelelement zumindest teilweise, insbesondere gänzlich, versenkt in der Lichtlenkfolie angeordnet ist. Dadurch ist eine positionsgenaue Anordnung des Lichtenergieumwandelelementes relativ zur Lichtlenkfolie bzw. deren Struktur umsetzbar, sodass die Struktur der Lichtlenkfolie auf eine Position, sowie insbesondere Form und/oder Größe, des Lichtenergieumwandelelementes abgestimmt werden kann, um einen hohen Lichtstrom des Sonnenlichtes auf das Lichtenergieumwandelelement zu leiten. Ein zumindest teilweise, bevorzugt gänzlich, versenktes Anordnen des Lichtenergieumwandelelementes in der Lichtlenkfolie schützt zudem das Lichtenergierumwandelelement bzw. dessen Oberfläche vor Verschmutzungen und ermöglicht eine besonders kompakte Ausbildung des Solarmodules.

Vorteilhaft ist es, wenn die Struktur der Lichtlenkfolie in eine in einem Arbeitszustand des Solarmodules einer Sonne zugewandten ersten Oberfläche der Lichtlenkfolie eingebracht und ausgebildet ist, Sonnenlicht derart in Richtung einer zweiten Oberfläche der Lichtlenkfolie zu leiten, dass das Sonnenlicht über eine Totalreflexion an der zweiten Oberfläche in Richtung des zumindest einen Lichtenergieumwandelelementes leitbar ist bzw. geleitet wird. Dadurch kann ein besonders großer Lichtstrom in Richtung des bzw. auf das Lichtenergieumwandelelement umgeleitet werden. Praktikabel ist dies umsetzbar, wenn die Struktur in die erste Oberfläche der Lichtlenkfolie eingebracht ist und die zweite Oberfläche der Folie im Wesentlichen eben ausgebildet ist. Um eine besonders effiziente Lichtumlenkung in Richtung Lichtenergieumwandelelement zu erreichen, kann die Struktur in die erste Oberfläche und zweite Oberfläche eingebracht sein. Es versteht sich, dass sich die in die erste Oberfläche und zweite Oberfläche eingeprägten Ausformungen der Struktur üblicherweise voneinander unterscheiden Üblicherweise ist die zweite Oberfläche der Lichtlenkfolie auf einer im Arbeitszustand von der Sonne abgewandten Seite der Lichtlenkfolie angeordnet.

Günstig ist es, wenn auf die zweite Oberfläche der Lichtlenkfolie zumindest abschnittweise, bevorzugt gänzlich, eine Reflexionsbeschichtung aufgebracht ist. Dadurch können Mehrfachreflexionen zwischen Oberflächen der Lichtlenkfolie verstärkt werden, wodurch ein größerer Sonnenlichtanteil in Richtung Lichtenergieumwandelelement geleitet werden kann. Die Reflexionsbeschichtung kann beispielsweise mit Aluminium oder Silber gebildet sein. Vorteilhaft ist es, wenn die Reflexionsbeschichtung stark reflektierend, insbesondere spiegelnd, ausgeführt ist. Hierfür ist es günstig, wenn die Reflexionsbeschichtung mit einem durchschnittlichen Reflexionsgrad größer als 80 %, bevorzugt größer als 90 %, ausgebildet ist. Der durchschnittliche Reflexionsgrad bezieht sich dabei gegebenenfalls auf einen Lichtstrom des Sonnenlichtes in einem für das menschliche Auge sichtbaren Bereich des Sonnenlichtes oder insbesondere auf einen bestimmten vorgegebenen Wellenlängenbereich des Sonnenlichtes. Für eine hohe Effizienz kann es zweckmäßig sein, wenn die Reflexionsbeschichtung wellenlängenselektiv ausgebildet ist, sodass nur ein oder mehrere bestimmte Wellenlängenbereiche eines auf die Reflexionsbeschichtung auftreffenden Sonnenlichtes durch die Reflexionsbeschichtung reflektiert werden. Praktikabel kann dies umgesetzt sein, indem die Reflexionsbeschichtung mit mehreren Schichten mit unterschiedlichen Brechungsindizes ausgebildet ist. Praktikabel kann es auch sein, wenn eine vorstehend beschriebene Reflexionsbeschichtung auf die erste und zweite Oberfläche der Lichtlenkfolie aufgebracht ist.

Je nach Anwendungszweck kann es auch günstig sein, wenn auf die zweite Oberfläche der Lichtlenkfolie zumindest abschnittweise, bevorzugt gänzlich, eine Antireflexionsbeschichtung oder eine Absorptionsbeschichtung, insbesondere für einen Infrarot-Bereich und/oder UV-Bereich des elektromagnetischen Wellenspektrums aufgebracht ist.

Zweckmäßig ist es, wenn das Sonnenlicht nach der Totalreflexion an der zweiten Oberfläche der Lichtlenkfolie innerhalb der Lichtlenkfolie bis zu dem Ausschnitt leitbar ist, in welchem das Lichtenergieumwandelelement angeordnet ist. Indem das Sonnenlicht innerhalb der Lichtlenkfolie bis zum Ausschnitt leitbar ist, sind ungewollte Lichtstreuungen des Sonnenlichtes an Verschmutzungen reduzierbar und eine besonders effiziente Lichtenergieverwertung, insbesondere mit einem kleinräumigen Aufbau, ermöglicht.

Bewährt hat es sich, dass das zumindest eine Lichtenergieumwandelelement an einer in einem Arbeitszustand des Solarmodules von einer Sonne abgewandten Seite der Lichtlenkfolie angeordnet ist. Die Lichtlenkfolie stellt damit einen Schutz für das Lichtenergieumwandelelement dar. Darüber hinaus ist dadurch eine präzise Abstimmung der Struktur im Hinblick auf eine Totalreflexion an der zweiten Oberfläche der Lichtlenkfolie besonders einfach umsetzbar.

Eine hohe Effizienz ist erreichbar, wenn das Solarmodul mehrere Lichtenergieumwandelelemente aufweist, welche bevorzugt in regelmäßigen Abständen zueinander, insbesondere in Ausschnitten der Lichtlenkfolie, an der Lichtlenkfolie angeordnet sind.

Günstig ist es, wenn das Lichtenergieumwandelelement als Solarzellenstreifen ausgebildet ist, um Sonnenlicht in elektrische Energie umzuwandeln. Eine einfache Umsetzung wird erreicht, wenn mehrere, insbesondere parallel zueinander angeordnete, Solarzellenstreifen vorgesehen sind.

Eine einfache Herstellbarkeit wird erreicht, wenn als Solarzellen bzw. Solarzellenstreifen ausgebildete Lichtenergieumwandelelemente, zumindest teilweise, bevorzugt gänzlich, auf die Lichtlenkfolie bzw. in deren Ausschnitte gedruckt werden. Dies kann beispielsweise mit einem 3-D-Drucker erfolgen, welcher insbesondere ausgebildet ist, um Schichten einer Solarzelle bzw. eines Solarzellenstreifens, üblicherweise zeitlich nacheinander, auf eine Lichtlenkfolie aufzubringen bzw. aufzudrucken.

Für einen hohen Wirkungsgrad des Solarmodules ist es günstig, wenn eine Form bzw. Gestalt des Energieumwandelelementes bzw. dessen Außenoberfläche auf die Struktur der Lichtlenkfolie bzw. eine in einem Arbeitszustand des Solarmodules durch die Lichtlenkfolie geänderte Lichtstärkeverteilung des Sonnenlichtes abgestimmt ist. Dies gilt besonders, wenn im Arbeitszustand des Solarmodules Sonnenlicht über eine Totalreflexion an der zweiten Oberfläche der Lichtlenkfolie in Richtung des bzw. auf das Lichtenergieumwandelelement leitbar ist bzw. geleitet wird. Außenoberfläche bezeichnet, dabei zweckmäßig eine Oberfläche des Lichtenergieumwandelelementes, welche ausgebildet ist, in einem Arbeitszustand des Lichtenergieumwandelelementes bzw. des Solarmodules auf das Lichtenergieumwandelelement auftreffendes Licht, insbesondere Sonnenlicht, aufzunehmen bzw. zu absorbieren oder gegebenenfalls in ein Inneres des Lichtenergieumwandelelementes weiterzuleiten, um dieses mit dem Lichtenergieumwandelelement in nutzbare Energie, beispielsweise elektrische Energie und/oder Wärmeenergie, umzuwandeln. Die Außenoberfläche kann beispielsweise mit mehreren, insbesondere elektrisch verbundenen, Solarzellen gebildet sein.

Bewährt hat es sich hierzu, wenn eine Außenoberfläche des zumindest einen Lichtenergieumwandelelementes in einem Querschnitt, insbesondere in einem zu einer Oberfläche der Lichtlenkfolie orthogonalen oder parallelen Querschnitt, eine polygonale Form aufweist. Dadurch kann Licht bzw. Sonnenlicht effizient, insbesondere mit geringen Verlusten, über unterschiedlich orientierte Flächenabschnitte der Außenoberfläche durch das Lichtenergieumwandelelement aufgenommen werden. Eine einfache Herstellbarkeit, insbesondere wenn das Lichtenergieumwandelelement mit einer oder mehreren Solarzellen bzw. Solarzellenstreifen ausgebildet ist, wird erreicht, wenn die polygonale Form dabei als Dreieck, Viereck, Fünfeck, Sechseck, Siebeneck oder Achteck ausgebildet ist. Es versteht sich, dass für eine hohe Lichtausbeute auch noch höhereckige polygonale Formen vorteilhaft sein können, wenngleich dadurch ein Herstellungsaufwand zunimmt. Dieses Grundprinzip weiterführend kann es günstig sein, wenn eine Außenoberfläche des Lichtenergieumwandelelementes in einem Querschnitt, insbesondere in einem zu einer Oberfläche der Lichtlenkfolie orthogonalen oder parallelen Querschnitt, zumindest abschnittsweise als Segment eines Kreises oder kreisförmig ausgebildet ist.

Grundsätzlich ist eine besonders hohe Anpassung bzw. Abstimmung des Lichtenergieumwandelelementes an bzw. auf die Struktur der Lichtlenkfolie erreichbar, wenn eine Außenoberfläche des Lichtenergieumwandelelementes in einem Querschnitt, insbesondere in einem zu einer Oberfläche der Lichtlenkfolie orthogonalen oder parallelen Querschnitt, zumindest abschnittsweise mit variierenden Krümmungen ausgebildet ist.

Bevorzugt für eine hohe Lichtausbeute ist es, wenn eine Außenoberfläche des Lichtenergieumwandelelementes in einem Querschnitt, insbesondere in einem zu einer Oberfläche der Lichtlenkfolie orthogonalen oder parallelen Querschnitt, zumindest abschnittsweise als Segment eines Ellipse oder einer Parabel ausgebildet ist. Dies gilt vor allem, wenn das Lichtenergierumwandelelement mit Solarzellen ausgeführt ist.

Ist das zumindest eine Lichtenergieumwandelelement mit einem bzw. als Solarzellenstreifen ausgebildet, kann eine hohe Abstimmung des Lichtenergieumwandelelementes mit der Struktur der Lichtlenkfolie erreicht werden, wenn der Solarzellenstreifen entlang einer Längsrichtung des Solarzellenstreifens gekrümmt, insbesondere mit variierenden Krümmungen, ausgebildet ist. Bewährt hat es sich dabei, wenn der Solarzellenstreifen entlang der Längsrichtung die Form eines Segmentes eines Kreises, einer Ellipse oder einer Parabel aufweist. So können Solarzellenstreifen beispielsweise mit einer sichelförmigen Form ausgebildet sein. Insbesondere wenn die Lichtlenkfolie keine Vorzugsrichtung hinsichtlich einer Lichtlenkung aufweist, kann es günstig sein, wenn der Solarzellenstreifen, insbesondere in einer Draufsicht auf den Solarzellenstreifen, kreisförmig oder elliptisch angeordnet bzw. geformt ist.

Es versteht sich, dass wenn mehrere Lichtenergieumwandelelemente vorgesehen sind, diese unterschiedlich geformt sein können.

Als günstig hat es sich erwiesen, wenn ein Solarzellenstreifen, insbesondere in einer Draufsicht auf den Solarzellenstreifen, mit mehreren Schenkeln gebildet ist, wobei die Schenkel winkelig aneinander anschließend miteinander verbunden sind. Ein solcher Solarzellenstreifen kann beispielsweise v-förmig oder zick-zack-förmig ausgebildet sein.

Es versteht sich, dass ein vorgenannter Solarzellenstreifen mit mehreren, insbesondere elektrisch miteinander verbundenen, Solarzellenstreifen gebildet bzw. zusammengesetzt sein kann.

Vorteilhaft ist es, wenn das Solarmodul zumindest teilweise transparent ausgebildet ist, sodass ein auf das Solarmodul auftreffendes Sonnenlicht zumindest teilweise durch das Solarmodul transmittiert wird. Dadurch kann ein Anteil eines auf das Solarmodul auftreffenden Sonnenlichtes mit dem Lichtenergieumwandelelement in nutzbare Energie umgewandelt werden, während ein anderer Anteil des Sonnenlichtes zu Beleuchtungszwecken durch das Solarmodul hindurchtreten kann. Günstig ist es hierzu, wenn das Solarmodul derart ausgebildet ist, dass zumindest 30 %, insbesondere zumindest 40 %, bevorzugt zumindest 60 %, eines auf das Lichtmodul auftreffenden Lichtstromes des Sonnenlichtes in einem für das menschliche Auge sichtbaren Bereich des Sonnenlichtes durch das Solarmodul transmittiert wird.

Weitere Merkmale, Vorteile und Wirkungen ergeben sich aus den nachfolgend dargestellten Ausführungsbeispielen. In den Zeichnungen, auf welche dabei Bezug genommen wird, zeigen:
Fig. 1 eine Lichtlenkfolie, welche vor einer Lichtquelle angeordnet ist;
Fig. 2 ein Lichtverteilungsdiagramm mit einer durch die Lichtlenkfolie der Fig. 1 erreichbaren Lichtstärkeverteilung;
Fig. 3 ein Ablaufdiagramm eines Verfahrens zur Herstellung einer Lichtlenkfolie;
Fig. 4 eine schematische Darstellung eines Abschnittes eines Solarmodules;
Fig. 5 zeigt eine schematische Darstellung eines Abschnittes einer erfindungsgemäßen Beleuchtungsvorrichtung.

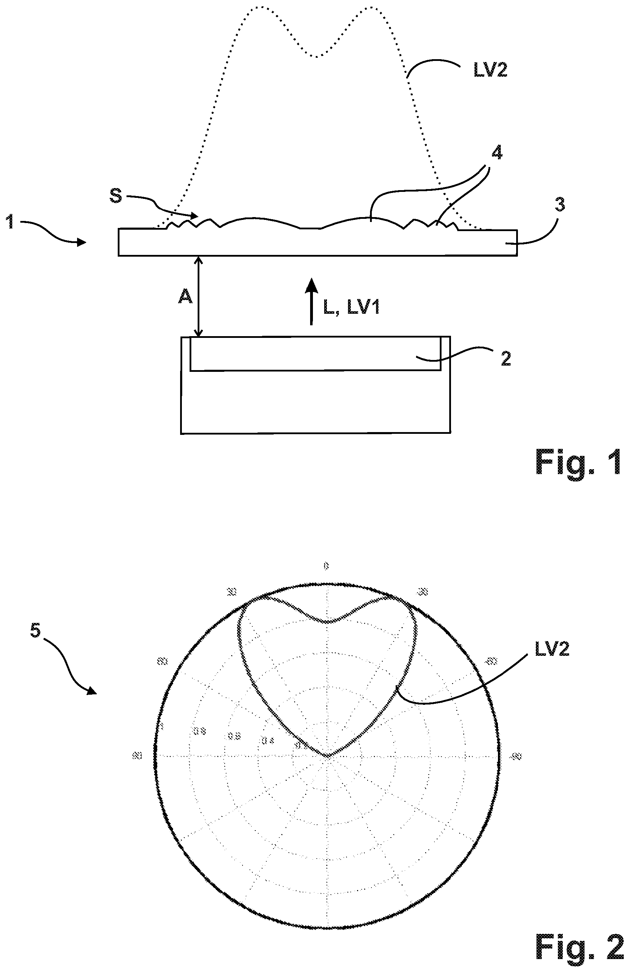

Fig. 1 zeigt eine schematische Darstellung einer Lichtlenkfolie 1, welche nicht Teil der Erfindung ist, die in einem Abstand A vor einer Lichtquelle, welche als LED 2 ausgebildet ist, angeordnet ist. Die Lichtlenkfolie 1 ist dabei in einem zu einer Oberfläche der Folie 3 vertikalen Querschnitt dargestellt. Die Lichtlenkfolie 1 ist mit einer Folie 3 gebildet, wobei in eine Oberfläche der Folie 3 eine Struktur S mit Erhöhungen 4 und Vertiefungen eingeprägt ist, um eine Richtung eines auf die Struktur S auftreffenden Lichtes der Lichtquelle zu ändern, wobei Abmessungen der Erhöhungen 4 und Vertiefungen größer als eine Wellenlänge des auf diese auftreffenden Lichtes der LED 2 sind. Die LED 2 weist eine bestimmte Abstrahlcharakteristik LV1 auf, welche eine räumliche Intensitätsverteilung eines von der LED 2 emittierten Lichtes L beschreibt. Um eine bestimmte Lichtstärkeverteilung LV2 mit hoher Präzision zu erreichen, ist vorgesehen, dass mehrere Erhöhungen 4 in einem zu einer Oberfläche der Folie 3 vertikalen Querschnitt mit einer Außenkontur mit variierenden Krümmungen ausgebildet sind. Ersichtlich ist, dass die Erhöhungen 4 dabei eine Außenkontur aufweisen, welche als Segmente von Ellipsen geformt sind. Auf diese Weise kann das auf die Struktur S auftreffende Licht präzise umgelenkt bzw. geformt werden. Zudem weist eine derartig geformte Struktur S bzw. Erhöhung 4 eine hohe Robustheit auf und kann, insbesondere durch Einprägen mit einer Prägewalze, mit relativ geringem Nachbearbeitungsaufwand hergestellt werden.

Eine derartig geformte Struktur S ergibt sich vorteilhaft dadurch, dass bei einer Herstellung der Lichtlenkfolie 1 eine gewünschte, gegebenenfalls inhomogene, Lichtstärkeverteilung LV2 vorgegeben wird, ein Berechnen der Struktur S abhängig vom Abstand A zwischen Lichtquelle und Lichtlenkfolie 1 sowie der Abstrahlcharakteristik LV1 der Lichtquelle erfolgt, um die vorgegebene Lichtstärkeverteilung LV2 zu erreichen und wonach schließlich ein Einprägen der berechneten Struktur S in die Oberfläche der Folie 3 durchgeführt wird. Auf diese Weise ist die vorgegebene Lichtstärkeverteilung LV2 mit hoher Präzision erreichbar bzw. formbar.

Ersichtlich ist, dass die Folie 3 im vertikalen Querschnitt zu einer Oberfläche der Folie 3 zwei, insbesondere beabstandet, angeordnete Erhöhungen 4 aufweist, deren Außenkonturen als Segmente von Ellipsen geformt sind. Dadurch ist eine Lichtstärkeverteilung LV2 mit zwei Intensitätsmaxima erreichbar. Zudem sind weitere Erhöhungen 4 mit einer Außenkontur ausgebildet, welche winkelig geformt ist, wobei ein erster Winkelschenkel als Gerade und ein zweiter Winkelschenkel als Segment einer Ellipse ausgebildet ist. Diese ermöglichen es, eine Anpassung an eine vorgegebene Lichtstärkeverteilung LV2 weiter zu präzisieren. Die Struktur S ermöglicht schließlich aufgrund deren speziellen Ausgestaltung eine formpräzise Ausgestaltung einer flügelartigen Lichtstärkeverteilung LV2, einer sogenannten Batwing-Verteilung.

Fig. 2 zeigt ein Lichtverteilungsdiagramm 5 mit einer durch die Lichtlenkfolie 1 der Fig. 1 erreichbaren Lichtstärkeverteilung LV2 bzw. Lichtverteilungskurve. Ersichtlich ist, dass eine formpräzise flügelartige Lichtstärkeverteilung LV2 erreichbar ist, welche insbesondere ohne Kanten fein ausgeformt ist.

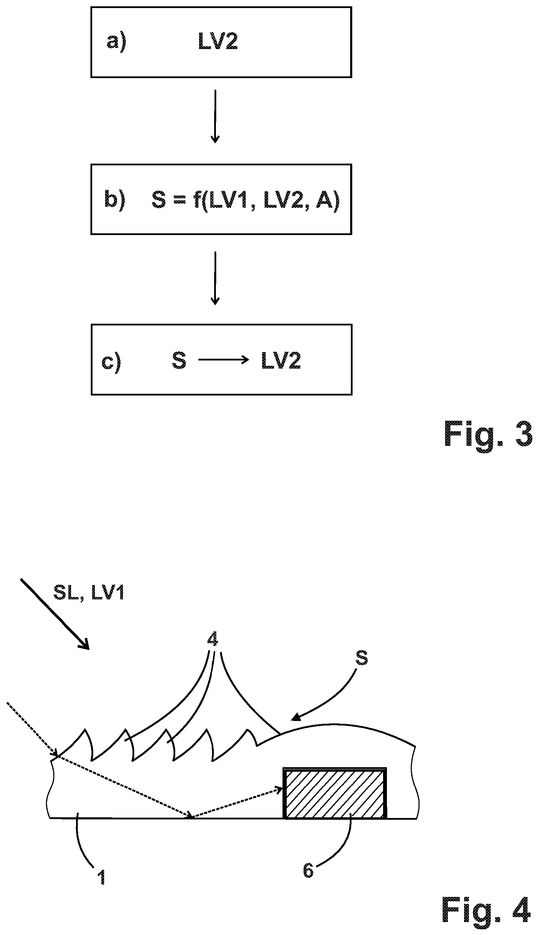

Fig. 3 zeigt ein Ablaufdiagramm eines Verfahrens zur Herstellung einer Lichtlenkfolie 1, das Teil des erfindungsgemäßen Verfahrens ist.

Indem bei einer Herstellung der Lichtlenkfolie 1 eine gewünschte Lichtstärkeverteilung LV2 vorgegeben wird und eine in zumindest eine Oberfläche der Folie 3 einzuprägende Struktur S entsprechend der vorgegebenen Lichtstärkeverteilung LV2 berechnet wird, um diese zu erreichen, ist die Lichtlenkfolie 1 spezifisch auf einen jeweiligen Einsatzzweck abgestimmt herstellbar. Wie im Ablaufdiagramm schematisch gezeigt, umfasst die Herstellung der Lichtlenkfolie 1 folgende, insbesondere aufeinanderfolgende, Schritte:
a) Vorgeben einer gewünschten, gegebenenfalls inhomogenen, Lichtstärkeverteilung LV2, welche durch die Lichtlenkfolie 1 erreichbar sein soll. Dadurch ist die Lichtlenkfolie 1 spezifisch auf einen jeweiligen Einsatzzweck abgestimmt herstellbar.
b) Berechnen der Struktur S abhängig von einem Abstand A zwischen Lichtquelle und Lichtlenkfolie 1 sowie einer Abstrahlcharakteristik LV1 der Lichtquelle, um die vorgegebene Lichtstärkeverteilung LV2 zu erreichen. Indem vorgesehen ist, dass in die Berechnung der Struktur S der Abstand A zwischen Lichtquelle und Lichtlenkfolie 1 in einer späteren Arbeitsposition der Lichtlenkfolie 1 sowie die Abstrahlcharakteristik LV1 der Lichtquelle in dieser Arbeitsposition eingeht, wird eine Struktur S geschaffen, welche geeignet ist, die vorgegebene Lichtstärkeverteilung LV2 mit hoher Präzision zu erreichen.
c) Einprägen der berechneten Struktur S in die zumindest eine Oberfläche der Folie 3, um die Lichtlenkfolie 1 auszubilden. Durch Einprägen, insbesondere mit einer Prägewalze, wird die berechnete Struktur S formpräzise in die Oberfläche der Folie 3 eingeprägt, wodurch eine Lichtstärkefolie ausgebildet wird, welche eine präzise Formung des von der Lichtquelle emittierten Lichtes entsprechend der vorgegebenen Lichtstärkeverteilung LV2 ermöglicht.

Fig. 4 zeigt eine schematische Darstellung eines Abschnittes eines Solarmodules, welches nicht Teil der Erfindung ist, zur Speicherung bzw. Umwandlung von Sonnenenergie SL in nutzbare Energie. Das Solarmodul umfasst eine Lichtlenkfolie 1, welche insbesondere entsprechend der in Fig. 1 gezeigten Lichtlenkfolie 1 ausgebildet sein kann, sowie ein Lichtenergieumwandelelement 6, welches als Solarzelle bzw. Solarzellenstreifen ausgebildet ist, um Lichtenergie bzw. Sonnenlichtenergie in elektrische Energie umzuwandeln. Das Lichtenergieumwandelelement 6 ist in einem Ausschnitt der Lichtlenkfolie 1 angeordnet, sodass das Lichtenergieumwandelelement 6 zumindest teilweise, bevorzugt gänzlich, versenkt in der Lichtlenkfolie 1 angeordnet ist. Die Lichtlenkfolie 1 ist mit einer Folie gebildet, wobei in einer in einem Arbeitszustand des Solarmodules einer Sonne zugewandten Oberfläche der Lichtlenkfolie 1 eine Struktur S mit Erhöhungen 4 und Vertiefungen eingeprägt ist, um eine Richtung eines auf die Struktur S auftreffenden Sonnenlichtes SL, welches eine Abstrahlcharakteristik LV1 aufweist, zu ändern und, insbesondere entsprechend einer vorgegebenen Lichtstärkeverteilung LV2, in Richtung bzw. auf das Lichtenergieumwandelelement 6 zu leiten. Vorteilhaft ist vorgesehen, dass die Struktur S ausgebildet ist, Sonnenlicht SL durch Lichtbrechung an der Struktur S derart in Richtung einer im Arbeitszustand von der Sonne abgewandten Oberfläche der Lichtlenkfolie 1 zu leiten, dass das Sonnenlicht SL über eine Totalreflexion an der von der Sonne abgewandten Oberfläche in Richtung des bzw. auf das Lichtenergieumwandelelement 1 umgelenkt wird.

Durch eine Verwendung einer erfindungsgemäßen Lichtlenkfolie 1 in einem Solarmodul ist auf diese Weise eine optimierte Änderung bzw. Formung einer

Lichtstärkeverteilung LV2 von Sonnenlicht SL ermöglicht, um dieses abgestimmt auf eine Position des Lichtenergieumwandelelementes 6 bzw. der Solarzelle im Solarmodul relativ zur Lichtlenkfolie 1 besonders präzise in Richtung des Lichtenergieumwandelelementes 6 umzulenken und dadurch eine hohe Effizienz bei einer Umwandlung von Sonnenenergie in nutzbare Energie, insbesondere elektrische Energie, zu erreichen.

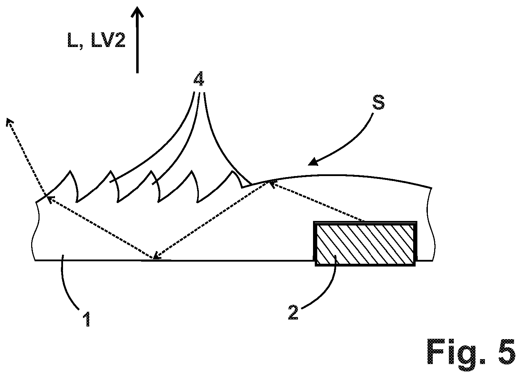

Fig. 5 zeigt eine schematische Darstellung eines Abschnittes einer erfindungsgemäßen Beleuchtungsvorrichtung. Die Beleuchtungsvorrichtung umfasst eine Lichtlenkfolie 1, welche entsprechend der in Fig. 1 gezeigten Lichtlenkfolie 1 ausgebildet sein kann, sowie ein Leuchtmittel, welches als LED 2 ausgebildet ist.

Die LED 2 ist in einer Aufnahme der Lichtlenkfolie 1 angeordnet, sodass die LED 2 zumindest teilweise, bevorzugt gänzlich, versenkt in der Lichtlenkfolie 1 angeordnet ist. Die Lichtlenkfolie 1 ist mit einer Folie 3 gebildet, wobei in einer in einem Arbeitszustand der Beleuchtungsvorrichtung von der LED 2 angewandten Oberfläche der Lichtlenkfolie 1 eine Struktur S mit Erhöhungen 4 und Vertiefungen eingeprägt ist, um eine Richtung eines auf die Struktur S auftreffenden Lichtes L der LED 2, welches eine Abstrahlcharakteristik LV1 aufweist, zu ändern und, insbesondere entsprechend einer vorgegebenen Lichtstärkeverteilung LV2, für eine Beleuchtung abzugeben bzw. weiterzuleiten.

Erfindungsgemäß ist vorgesehen, dass die Struktur S ausgebildet ist, von der LED 2 emittiertes Licht L derart in Richtung einer im Arbeitszustand der LED 2 zugewandten Oberfläche der Lichtlenkfolie 1 zu leiten bzw. zurück zu reflektieren, dass das Licht L mit einer Totalreflexion an der der LED 2 zugewandten Oberfläche reflektiert wird und anschließend, insbesondere unter Lichtbrechung an der Struktur S, von der Beleuchtungsvorrichtung abgestrahlt wird.

Auf diese Weise kann das von dem Leuchtmittel bzw. der LED 2 emittierte Licht aufgeweitet und insbesondere homogenisiert werden, sodass in Folge eine gleichmäßige Abstrahlung und/oder insbesondere präzise Lichtlenkung mit der Lichtlenkfolie 1 erreichbar ist, da ungewollte Lichtinhomogenitäten bzw. eine komplexe Abstrahlcharakteristik eines von dem Leuchtmittel bzw. der LED 2 emittierten Lichtes, insbesondere durch Mehrfachreflexionen innerhalb der Lichtlenkfolie, geglättet werden können.

## Patentansprüche

1. Verfahren zur Herstellung einer Beleuchtungsvorrichtung, wobei die Beleuchtungsvorrichtung eine Lichtlenkfolie (1) zur Änderung einer Lichtstärkeverteilung eines Leuchtmittels aufweist, wobei zur Herstellung der Lichtlenkfolie (1) in eine Folie (3) an zumindest einer Oberfläche der Folie (3) eine Struktur (S) mit Erhöhungen (4) und Vertiefungen eingeprägt wird, um eine Richtung eines auf die Struktur (S) auftreffenden Lichtes des Leuchtmittels zu ändern, wobei Abmessungen der Erhöhungen (4) und Vertiefungen größer als eine Wellenlänge des auf diese auftreffenden Lichtes des Leuchtmittels sind, wobei zumindest eine der Erhöhungen (4), vorzugsweise eine Vielzahl der Erhöhungen (4), in einem ersten zu einer Oberfläche der Folie (3) vertikalen Querschnitt mit einer Außenkontur mit variierenden Krümmungen ausgebildet wird, wobei die Herstellung der Lichtlenkfolie (1) folgende Schritte umfasst:
a) Vorgeben einer gewünschten, gegebenenfalls inhomogenen,
Lichtstärkeverteilung (LV2);
b) Berechnen der Struktur (S) abhängig von einem Abstand (A) zwischen Leuchtmittel und Lichtlenkfolie (1) sowie einer Abstrahlcharakteristik (LV1) des Leuchtmittels, um die vorgegebene Lichtstärkeverteilung (LV2) zu erreichen;
c) Einprägen der berechneten Struktur (S) in die zumindest eine Oberfläche der Folie (3), um die Lichtlenkfolie (1) auszubilden,
wobei die Struktur (S) der Lichtlenkfolie (1) in eine erste Oberfläche der Lichtlenkfolie (1) eingebracht ist, **dadurch gekennzeichnet, dass** die Struktur (S) ausgebildet ist, vom Leuchtmittel emittiertes Licht derart in Richtung einer zweiten Oberfläche der Lichtlenkfolie (1) zu leiten, dass das Licht mit einer Totalreflexion an der zweiten Oberfläche reflektierbar ist und anschließend von der Beleuchtungsvorrichtung für eine Beleuchtung abstrahlbar ist.

2. Verfahren nach Anspruch 1, **dadurch gekennzeichnet, dass** eine Oberfläche der Lichtlenkfolie (1) mit einer mittleren Rauheit Rₐ zwischen 0,4 µm und 0,9 µm und/oder einer gemittelten Rautiefe R_{z} zwischen 3 µm und 7 µm ausgebildet wird.

3. Verfahren nach Anspruch 1 oder 2, **dadurch gekennzeichnet, dass** die Folie (3) gekrümmt ausgebildet wird.

4. Verfahren nach einem der Ansprüche 1 bis 3, **dadurch gekennzeichnet, dass** die Lichtlenkfolie (1) mit Bereichen unterschiedlicher Transparenz ausgebildet wird.

5. Verfahren nach einem der Ansprüche 1 bis 4, **dadurch gekennzeichnet, dass** die zumindest eine Erhöhung (4) in einem zweiten zu einer Oberfläche der Folie (3) vertikalen Querschnitt, welcher rechtwinklig zum ersten vertikalen Querschnitt ausgerichtet ist, mit einer Außenkontur mit variierenden Krümmungen ausgebildet wird.

6. Verfahren nach einem der Ansprüche 1 bis 5, **dadurch gekennzeichnet, dass** vor oder nach dem Schritt c) eine elektronische Schaltung in die Folie (3) eingebracht und/oder auf die Folie (3) aufgebracht wird, wobei die elektronische Schaltung zumindest einen Sensor aufweist, um eine Messgröße zu erfassen, und/oder zumindest ein Aktor aufweist, um eine physikalische Größe entsprechend einem Steuersignale zu ändern.

7. Beleuchtungsvorrichtung mit einer Lichtlenkfolie (1) zur Änderung einer Lichtstärkeverteilung eines von einem Leuchtmittel der Beleuchtungsvorrichtung emittierten Lichtes, aufweisend eine Folie (3), wobei in zumindest eine Oberfläche der Folie (3) eine Struktur (S) mit Erhöhungen (4) und Vertiefungen eingebracht, insbesondere eingeprägt, ist, um eine Richtung eines auf die Struktur (S) auftreffenden Lichtes des Leuchtmittels zu ändern, wobei Abmessungen der Erhöhungen (4) und Vertiefungen größer als eine Wellenlänge des auf diese auftreffenden Lichtes des Leuchtmittels sind, wobei zumindest eine der Erhöhungen (4), vorzugsweise eine Vielzahl von Erhöhungen (4), in einem ersten zu einer Oberfläche der Folie (3) vertikalen Querschnitt mit einer Außenkontur mit variierenden Krümmungen ausgebildet ist, wobei die Struktur (S) der Lichtlenkfolie (1) in eine erste Oberfläche der Lichtlenkfolie (1) eingebracht ist, **dadurch gekennzeichnet, dass** die Struktur (S) ausgebildet ist, vom Leuchtmittel emittiertes Licht derart in Richtung einer zweiten Oberfläche der Lichtlenkfolie (1) zu leiten, dass das Licht mit einer Totalreflexion an der zweiten Oberfläche reflektierbar ist und anschließend von der Beleuchtungsvorrichtung für eine Beleuchtung abstrahlbar ist.

8. Beleuchtungsvorrichtung nach Anspruch 7, **dadurch gekennzeichnet, dass** die Lichtlenkfolie (1) zumindest eine Aufnahme aufweist, in welcher das Leuchtmittel angeordnet ist, sodass das Leuchtmittel zumindest teilweise, insbesondere gänzlich, versenkt in der Lichtlenkfolie (1) angeordnet ist.

## Claims

1. A method for producing a lighting device, wherein the lighting device has a light-directing film (1) for changing a luminous intensity distribution of a lamp, wherein, to produce the light-directing film (1), a structure (S) with elevations (4) and depressions is stamped into a film (3) on at least one surface of the film (3), in order to change a direction of light of the lamp impinging on the structure (S), wherein dimensions of the elevations (4) and depressions are larger than a wavelength of the light of the lamp impinging on the same, wherein at least one of the elevations (4), preferably a multiplicity of the elevations (4), is formed in a first cross section, which is vertical to a surface of the film (3), with an outer contour with varying curvatures, wherein the production of the light-directing film (1) comprises the following steps:
a) specifying a desired, possibly inhomogeneous, luminous intensity distribution (LV2);
b) calculating the structure (S) depending on a distance (A) between lamp and light-directing film (1) and a radiation characteristic (LV1) of the lamp, in order to achieve the specified luminous intensity distribution (LV2);
c) stamping the calculated structure (S) into the at least one surface of the film (3), in order to form the light-directing film (1),
wherein the structure (S) of the light-directing film (1) is introduced into a first surface of the light-directing film (1), **characterized in that** the structure (S) is formed to direct light emitted from a lamp in the direction of a second surface of the light-directing film (1) in such a manner that the light can be reflected with total internal reflection at the second surface and can subsequently be radiated by the lighting device for lighting.

2. The method according to Claim 1, **characterized in that** a surface of the light-directing film (1) is formed with an average roughness Rₐ of between 0.4 µm and 0.9 µm and/or an averaged peak-to-valley height R_{z} of between 3 µm and 7 µm.

3. The method according to Claim 1 or 2, **characterized in that** the film (3) is formed in a curved manner.

4. The method according to any one of Claims 1 to 3, **characterized in that** the light-directing film (1) is formed with regions of different transparency.

5. The method according to any one of Claims 1 to 4, **characterized in that** the at least one elevation (4) is formed in a second cross section, which is vertical to a surface of the film (3) and which is aligned at right angles to the first vertical cross section, with an outer contour with varying curvatures.

6. The method according to any one of Claims 1 to 5, **characterized in that**, before or after step c), an electronic circuit is introduced into the film (3) and/or applied to the film (3), wherein the electronic circuit has at least one sensor in order to detect a measured variable and/or has at least one actuator in order to change a physical variable in accordance with a control signal.

7. A lighting device having a light-directing film (1) for changing a luminous intensity distribution of a light emitted by a lamp of the lighting device, having a film (3), wherein a structure (S) with elevations (4) and depressions is introduced, in particular stamped, into at least one surface of the film (3), in order to change a direction of light of the lamp impinging on the structure (S), wherein dimensions of the elevations (4) and depressions are larger than a wavelength of the light of the lamp impinging on the same, wherein at least one of the elevations (4), preferably a multiplicity of elevations (4), is formed in a first cross section, which is vertical to a surface of the film (3), with an outer contour with varying curvatures, wherein the structure (S) of the light-directing film (1) is introduced into a first surface of the light-directing film (1), **characterized in that** the structure (S) is formed to direct light emitted by the lamp in the direction of a second surface of the light-directing film (1) in such a manner that the light can be reflected with total internal reflection at the second surface and can subsequently be radiated by the lighting device for lighting.

8. The lighting device according to Claim 7, **characterized in that** the light-directing film (1) has at least one mount in which the lamp is arranged, so that the lamp is arranged at least partially, preferably entirely, recessed in the light-directing film (1).

## Revendications

1. Procédé de fabrication d'un dispositif d'éclairage, sachant que le dispositif d'éclairage comporte une feuille d'orientation de la lumière (1) pour modifier une répartition de l'intensité lumineuse d'un moyen d'éclairage, sachant que pour fabriquer la feuille d'orientation de la lumière (1), une structure (S) pourvue d'élévations (4) et de cavités est imprimée dans une feuille (3) sur au moins une surface de la feuille (3) pour modifier une direction d'une lumière incidente sur la structure (S) du moyen d'éclairage, sachant que les dimensions des élévations (4) et des cavités sont supérieures à une longueur d'onde de la lumière incidente sur ces dernières du moyen d'éclairage, sachant qu'au moins une des élévations (4), de préférence une pluralité d'élévations (4), est constituée dans une première section verticale à une surface de la feuille (3) avec un profil extérieur avec des courbes variables, sachant que la fabrication de la feuille d'orientation de la lumière (1) comprend les étapes suivantes :
a) prédéfinition d'une répartition de l'intensité lumineuse souhaitée, le cas échéant non homogène (LV2) ;
b) calcul de la structure (S) en fonction d'une distance (A) entre le moyen d'éclairage et la feuille d'orientation de la lumière (1) ainsi que d'une caractéristique de rayonnement (LV1) du moyen d'éclairage afin d'atteindre la répartition d'intensité lumineuse prédéfinie (LV2) ;
c) impression de la structure calculée (S) dans au moins une surface de la feuille (3), pour constituer la feuille d'orientation de la lumière (1),
sachant que la structure (S) de la feuille d'orientation de la lumière (1) est incorporée dans une première surface de la feuille d'orientation de la lumière (1), **caractérisé en ce que** la structure (S) est constituée pour diriger la lumière émise par le moyen d'éclairage dans la direction d'une deuxième surface de la feuille d'orientation de la lumière (1) de telle façon que la lumière peut être réfléchie avec une réflexion totale sur la deuxième surface et peut être diffusée ensuite par le dispositif d'éclairage pour un éclairage.

2. Procédé selon la revendication 1, **caractérisé en ce qu'**une surface de la feuille d'orientation de la lumière (1) est constituée avec une rugosité moyenne Rₐ entre 0,4 µm et 0,9 µm et/ou une profondeur de rugosité R_{z} moyenne entre 3 µm et 7 µm.

3. Procédé selon la revendication 1 ou 2, **caractérisé en ce que** la feuille (3) est constituée courbée.

4. Procédé selon l'une quelconque des revendications 1 à 3, **caractérisé en ce que** la feuille d'orientation de la lumière (1) est constituée avec des zones de transparence différente.

5. Procédé selon l'une quelconque des revendications 1 à 4, **caractérisé en ce qu'**au moins une élévation (4) est constituée avec un profil extérieur avec des courbes variables dans une deuxième section verticale à une surface de la feuille (3), qui est perpendiculaire à la première section verticale.

6. Procédé selon l'une quelconque des revendications 1 à 5, **caractérisé en ce qu'**avant ou après l'étape c), un circuit électronique est incorporé dans la feuille (3) et/ou appliqué sur la feuille (3), sachant que le circuit électronique comporte au moins un capteur pour saisir une valeur de mesure, et/ou comporte au moins un actionneur pour modifier une grandeur physique conformément à un signal de commande.

7. Dispositif d'éclairage avec une feuille d'orientation de la lumière (1) pour modifier une répartition de l'intensité lumineuse d'une lumière émise par un moyen d'éclairage du dispositif d'éclairage, comportant une feuille (3), sachant qu'une structure (S) avec des élévations (4) et des cavités est incorporée, en particulier imprimée dans au moins une surface de la feuille (3) pour modifier une direction d'une lumière incidente sur la structure (S) du moyen d'éclairage, sachant que les dimensions des élévations (4) et des cavités sont supérieures à une longueur d'onde de la lumière incidente sur ces dernières du moyen d'éclairage, sachant qu'au moins une des élévations (4), de préférence une pluralité d'élévations (4), est constituée dans une première section verticale à une surface de la feuille (3) avec un profil extérieur avec des courbes variables, sachant que la structure (S) de la feuille d'orientation de la lumière (1) est incorporée dans une première surface de la feuille d'orientation de la lumière (1), **caractérisé en ce que** la structure (S) est constituée pour diriger la lumière émise par le moyen d'éclairage dans la direction d'une deuxième surface de la feuille d'orientation de la lumière (1) de telle façon que la lumière peut être réfléchie avec une réflexion totale sur la deuxième surface et peut être diffusée ensuite par le dispositif d'éclairage pour un éclairage.

8. Dispositif d'éclairage selon la revendication 7, **caractérisé en ce que** la feuille d'orientation de la lumière (1) comporte au moins un logement dans lequel est disposé le moyen d'éclairage de telle manière que le moyen d'éclairage est disposé au moins en partie, en particulier complètement, noyé dans la feuille d'orientation de la lumière (1).
